(19) Europäisches Patentamt
European Patent Office
Office européen des brevets

(11) EP 2 516 551 B1

(12) **EUROPEAN PATENT SPECIFICATION**

(45) Date of publication and mention of the grant of the patent:
**21.12.2016 Bulletin 2016/51**

(21) Application number: **10843424.2**

(22) Date of filing: **29.11.2010**

(51) Int Cl.:
***C08L 77/00*** (2006.01) ***C08L 77/06*** (2006.01)
***C08L 83/12*** (2006.01) ***C08L 71/12*** (2006.01)
***C08J 5/04*** (2006.01) *C08K 5/5313* (2006.01)
*C08K 7/14* (2006.01) *C08G 77/52* (2006.01)

(86) International application number:
**PCT/US2010/058146**

(87) International publication number:
**WO 2011/087586 (21.07.2011 Gazette 2011/29)**

(54) **POLY(ARYLENE ETHER)/POLYAMIDE COMPOSITIONS, METHODS, AND ARTICLES**
POLY(ARYLENETHER)-POLYAMIDZUSAMMENSETZUNGEN, VERFAHREN UND ARTIKEL
COMPOSITIONS DE POLY(ÉTHER D'ARYLÈNE)/POLYAMIDE, PROCÉDÉS ET ARTICLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2009 US 644221**

(43) Date of publication of application:
**31.10.2012 Bulletin 2012/44**

(73) Proprietor: **SABIC Global Technologies B.V.**
**4612 PX Bergen op Zoom (NL)**

(72) Inventors:
- **ELKOVITCH, Mark**
**Selkirk**
**New York 12158 (US)**
- **TING, Sai-Pei**
**Slingerlands**
**New York 12159 (US)**

(74) Representative: **Lang, Johannes et al**
**Bardehle Pagenberg Partnerschaft mbB**
**Patentanwälte, Rechtsanwälte**
**Prinzregentenplatz 7**
**81675 München (DE)**

(56) References cited:
**WO-A1-01/40353**
**WO-A1-01/40353**
**WO-A1-2008/157034**
**US-A- 5 357 022**
**US-A- 5 357 022**
**US-A- 5 612 425**
**US-B2- 7 488 766**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### BACKGROUND OF THE INVENTION

Poly(arylene ether) resins have been blended with polyamide resins to provide compositions having a wide variety of beneficial properties such as heat resistance, chemical resistance, impact strength, hydrolytic stability, and dimensional stability.

In some applications it is desirable to use poly(arylene ether)/polyamide blends with good flame resistance. Unfortunately, this flame resistance is difficult to achieve for articles with thin sections while maintaining or improving mechanical properties. Conventional flame retardant poly(arylene ether)/polyamide blends often use silicone fluid and boron phosphate to achieve good flame resistance ratings, however the use of these flame retardants is associated with a loss of ductility. Moreover, it is particularly difficult to achieve flame retardancy in glass fiber reinforced thermoplastic compositions, because the presence of the reinforcing filler alters the combustion behavior of the composition compared to non-reinforced compositions. There therefore remains a need for poly(arylene ether)/polyamide compositions that exhibit good flame retardancy while minimally compromising or even improving ductility.

WO 2008/157034 A1 discloses compositions comprising a poly(arylene ether), a compatibilizing agent, a polyamide, glass fibers and a flame retardant comprising aluminium tris(diethylphosphinate).

US 5 357 022 A describes poly(phenylene ether)-polysiloxane copolymers prepared by oxidative copolymerization of a monohydric phenol and a hydroxyaryl-terminated polysiloxane.

### BRIEF DESCRIPTION OF THE INVENTION

One embodiment is a composition, comprising: 75 to 90 weight percent of a compatibilized blend of a polyamide comprising polyamide-6,6, and a poly(arylene ether)-polysiloxane block copolymer, the compatibilized blend being the product of compatibilizing 40 to 60 parts by weight of the polyamide and 40 to 60 parts by weight of the poly(arylene ether)-polysiloxane block copolymer, based on the total weight of the polyamide and the poly(arylene ether)-polysiloxane block copolymer; 2 to 10 weight percent of a metal dialkylphosphinate comprising aluminum tris(diethylphosphinate); and 5 to 15 weight percent glass fibers; wherein the poly(arylene ether)-polysiloxane block copolymer comprises the product of a process comprising oxidatively copolymerizing of a monomer mixture comprising 90 to 99 parts by weight of a monohydric phenol and 1 to 10 parts by weight of a hydroxyaryl-terminated polysiloxane; wherein all weight percents are based on the total weight of the composition.

Another embodiment is a method of forming a composition, the method comprising: melt blending 35 to 45 weight percent of a polyamide comprising polyamide-6,6; 35 to 47 weight percent of a poly(arylene ether)-polysiloxane block copolymer; 2 to 10 weight percent of a metal dialkylphosphinate comprising aluminum tris(diethylphosphinate); and 5 to 15 weight percent glass fibers to form a composition; wherein the poly(arylene ether)-polysiloxane block copolymer comprises the product of a process comprising oxidatively copolymerizing of a monomer mixture comprising 90 to 99 parts by weight of a monohydric phenol and 1 to 10 parts by weight of a hydroxyaryl-terminated polysiloxane, based on the total weight of the monohydric phenol and the hydroxyaryl-terminated polysiloxane;
wherein all weight percents are based on the total weight of the composition.

These and other embodiments, including articles comprising the composition, are described in detail below.

### BRIEF DESCRIPTION OF THE FIGURES

FIG. 1 is a scanning electron micrograph of the Comparative Example 1 composition.
FIG. 2 is a scanning electron micrograph of the Comparative Example 2 composition.
FIG. 3 is a scanning electron micrograph of the Comparative Example 5 composition.
FIG. 4 is a scanning electron micrograph of the Example 3 composition.
FIG. 5 is a scanning electron micrograph of the Comparative Example 6 composition.
FIG. 6 is a scanning electron micrograph of the Comparative Example 7 composition.

### DETAILED DESCRIPTION OF THE INVENTION

The present inventors have discovered that the addition of a poly(arylene ether)-polysiloxane block copolymer remarkably enhances the effectiveness of a metal dialkylphosphonate in improving the flame retardancy of polyamide compositions. Thus, one embodiment is a composition, comprising: 75 to 90 weight percent of a compatibilized blend of a polyamide comprising polyamide-6,6, and a poly(arylene ether)-polysiloxane block copolymer, the compatibilized

blend being the product of compatibilizing 40 to 60 parts by weight of the polyamide and 40 to 60 parts by weight of the poly(arylene ether)-polysiloxane block copolymer, based on the total weight of the polyamide and the poly(arylene ether)-polysiloxane block copolymer; 2 to 10 weight percent of a metal dialkylphosphinate comprising aluminum tris(diethylphosphinate); and 5 to 15 weight percent glass fibers; wherein the poly(arylene ether)-polysiloxane block copolymer comprises the product of a process comprising oxidatively copolymerizing of a monomer mixture comprising 90 to 99 parts by weight of a monohydric phenol and 1 to 10 parts by weight of a hydroxyaryl-terminated polysiloxane; wherein all weight percents are based on the total weight of the composition.

A polyamide is used to prepare the compatibilized blend. Polyamides, also known as nylons, are characterized by the presence of a plurality of amide (-C(O)NH-) groups, and are described in U.S. Patent No. 4,970,272 to Gallucci. Suitable polyamide resins include polyamide-6, polyamide-6,6, polyamide-4, polyamide-4,6, polyamide-12, polyamide-6,10, polyamide 6,9, polyamide-6,12, amorphous polyamide resins, polyamide 6/6T and polyamide 6,6/6T with triamine contents below 0.5 weight percent, polyamide 9T, and combinations thereof, provided that the polyamide resin comprises polyamide-6,6. In some embodiments, the polyamide resin comprises polyamide-6 and polyamide-6,6. In some embodiments, the polyamide resin or combination of polyamide resins has a melting point ($T_m$) greater than or equal to 171°C. When the polyamide comprises a super tough polyamide, that is, a rubber-toughened polyamide, the composition may or may not contain a separate impact modifier.

Polyamide resins may be obtained by a number of well known processes such as those described in U.S. Patent Nos. 2,071,250, 2,071,251, 2,130,523, and 2,130,948 to Carothers; 2,241,322 and 2,312,966 to Hanford; and 2,512,606 to Bolton et al. Polyamide resins are commercially available from a variety of sources.

Polyamide resins having an intrinsic viscosity of up to 400 milliliters per gram (mL/g) can be used, or, more specifically, having a viscosity of 90 to 350 mL/g, or, even more specifically, having a viscosity of 110 to 240 mL/g, as measured in a 0.5 weight percent (wt%) solution in 96 wt% sulfuric acid in accordance with ISO 307. The polyamide can have a relative viscosity of up to 6, or, more specifically, a relative viscosity of 1.89 to 5.43, or, even more specifically, a relative viscosity of 2.16 to 3.93. Relative viscosity is determined according to DIN 53727 in a 1 wt% solution in 96 wt% sulfuric acid.

In one embodiment, the polyamide resin comprises a polyamide having an amine end group concentration greater than or equal to 35 microequivalents amine end group per gram of polyamide (μeq/g) as determined by titration with HCl. The amine end group concentration may be greater than or equal to 40 μeq/g, or, more specifically, greater than or equal to 45 μeq/g. Amine end group content may be determined by dissolving the polyamide in a suitable solvent, optionally with heat. The polyamide solution is titrated with 0.01 Normal hydrochloric acid (HCl) solution using a suitable indication method. The amount of amine end groups is calculated based the volume of HCl solution added to the sample, the volume of HCl used for the blank, the molarity of the HCl solution, and the weight of the polyamide sample.

A poly(arylene ether)-polysiloxane block copolymer is used to prepare the compatibilized blend. As used herein, the term "poly(arylene ether)-polysiloxane block copolymer" refers to a block copolymer comprising at least one poly(arylene ether) block and at least one polysiloxane block.

The poly(arylene ether)-polysiloxane block copolymer is prepared by an oxidative copolymerization method. In this method, the poly(arylene ether)-polysiloxane block copolymer is the product of a process comprising oxidatively copolymerizing a monomer mixture comprising a monohydric phenol and a hydroxyaryl-terminated polysiloxane. This synthetic approach is most conducive to preparing block copolymers with relatively low polysiloxane contents. Thus, the monomer mixture comprises 90 to 99 parts by weight of the monohydric phenol and 1 to 10 parts by weight of the hydroxyaryl-terminated polysiloxane, based on the total weight of the monohydric phenol and the hydroxyaryl-terminated polysiloxane. The hydroxyaryl-diterminated polysiloxane can comprise a plurality of repeating units having the structure

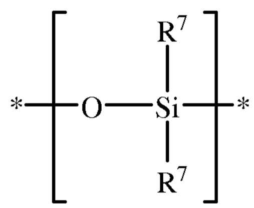

wherein each occurrence of $R^7$ is independently hydrogen, $C_1$-$C_{12}$ hydrocarbyl or $C_1$-$C_{12}$ halohydrocarbyl; and two terminal units having the structure

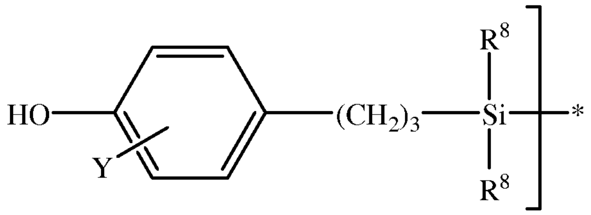

wherein Y is hydrogen, $C_1$-$C_{12}$ hydrocarbyl, $C_1$-$C_{12}$ hydrocarbyloxy, or halogen, and wherein each occurrence of $R^8$ is independently hydrogen, $C_1$-$C_{12}$ hydrocarbyl or $C_1$-$C_{12}$ halohydrocarbyl.

In some embodiments, the monohydric phenol comprises 2,6-dimethylphenol, and the hydroxyaryl-terminated polysiloxane has the structure

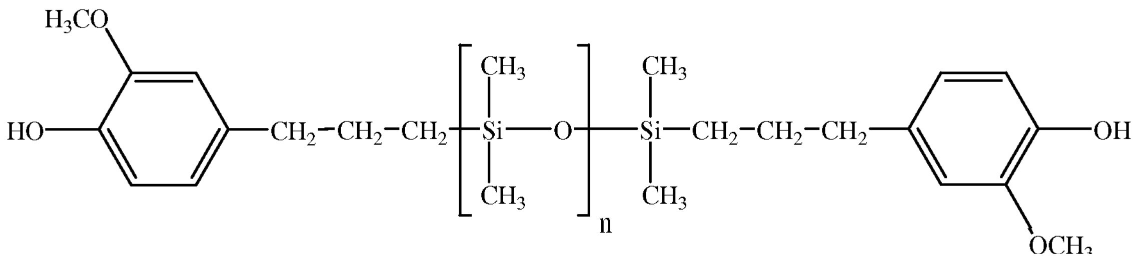

wherein n is, on average, 5 to 100.

The oxidative polymerization of a mixture of monohydric phenol and a hydroxyaryl-terminated polysiloxane produces poly(arylene ether)-polysiloxane block copolymer as the desired product and poly(arylene ether) (without an incorporated polysiloxane block) as a by-product. It is not necessary to separate the poly(arylene ether) from the poly(arylene ether)-polysiloxane block copolymer. The poly(arylene ether)-polysiloxane block copolymer can thus be incorporated into the present composition as a "reaction product" that includes both the poly(arylene ether) and the poly(arylene ether)-polysiloxane block copolymer. Certain isolation procedures, such as precipitation from isopropanol, make it possible to assure that the reaction product is essentially free of residual hydroxyaryl-terminated polysiloxane starting material. In other words, these isolation procedures assure that the polysiloxane content of the reaction product is essentially all in the form of poly(arylene ether)-polysiloxane block copolymer.

In some embodiments, the poly(arylene ether)-polysiloxane block copolymer is provided in the form of a poly(arylene ether)-polysiloxane block copolymer reaction product comprising a poly(arylene ether) and a poly(arylene ether)-polysiloxane block copolymer. The poly(arylene ether)-polysiloxane block copolymer can comprise a poly(arylene ether) block, and a polysiloxane block comprising, on average, about 35 to about 80 siloxane repeating units. The poly(arylene ether)-polysiloxane block copolymer reaction product can comprise about 1 to about 8 weight percent siloxane repeating units and 92 to 99 weight percent arylene ether repeating units. The poly(arylene ether)-polysiloxane block copolymer reaction product can have a weight average molecular weight of at least 30,000 atomic mass units.

When the poly(arylene ether)-polysiloxane block copolymer is provided in the form of a poly(arylene ether)-polysiloxane block copolymer reaction product, that reaction product includes comprises a poly(arylene ether). The poly(arylene ether) is the product of polymerizing the monohydric phenol alone and is a by-product of the block copolymer synthesis. When the monohydric phenol consists of a single compound (for example, 2,6-dimethylphenol), the poly(arylene ether) is the product of homopolymerizing that single monohydric phenol. When the monohydric phenol comprises two or more distinct monohydric phenol species (for example, a mixture of 2,6-dimethylphenol and 2,3,6-trimethylphenol), the poly(arylene ether) is the product of copolymerizing the two or more distinct monohydric phenol species. Using the nuclear magnetic resonance methods described in the working examples, it has not been possible to allocate the arylene ether residues between poly(arylene ether) and poly(arylene ether)-polysiloxane block copolymer. However, the presence of poly(arylene ether) is inferred from the detection and quantification of "tail" groups as defined below (e.g., 2,6-dimethylphenoxy groups when the monohydric phenol is 2,6-dimethylphenol) and/or the presence of "biphenyl" groups as defined below (e.g., the residue of 3,3',5,5'-tetramethyl-4,4'-biphenol) in the isolated product.

When the poly(arylene ether)-polysiloxane block copolymer is provided in the form of a poly(arylene ether)-polysiloxane block copolymer reaction product, it comprises a poly(arylene ether)-polysiloxane block copolymer. The poly(arylene ether)-polysiloxane block copolymer comprises a poly(arylene ether) block and a polysiloxane block. The poly(arylene ether) block is a residue of the polymerization of the monohydric phenol. In some embodiments, the poly(arylene ether) block comprises arylene ether repeating units having the structure

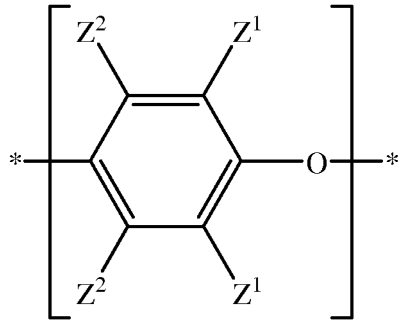

wherein for each repeating unit, each $Z^1$ is independently halogen, unsubstituted or substituted $C_1$-$C_{12}$ hydrocarbyl provided that the hydrocarbyl group is not tertiary hydrocarbyl, $C_1$-$C_{12}$ hydrocarbylthio, $C_1$-$C_{12}$ hydrocarbyloxy, or $C_2$-$C_{12}$ halohydrocarbyloxy wherein at least two carbon atoms separate the halogen and oxygen atoms; and each $Z^2$ is independently hydrogen, halogen, unsubstituted or substituted $C_1$-$C_{12}$ hydrocarbyl provided that the hydrocarbyl group is not tertiary hydrocarbyl, $C_1$-$C_{12}$ hydrocarbylthio, $C_1$-$C_{12}$ hydrocarbyloxy, or $C_2$-$C_{12}$ halohydrocarbyloxy wherein at least two carbon atoms separate the halogen and oxygen atom. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. When the hydrocarbyl residue is described as substituted, it may, optionally, contain heteroatoms over and above the carbon and hydrogen members of the substituent residue. Thus, when specifically described as substituted, the hydrocarbyl residue may also comprise one or more substituents such as halogen (including fluorine, chlorine, bromine, and iodine), carboxylic acid groups, amino groups, hydroxyl groups, or the like, or it may contain divalent heteroatoms-containing groups such as oxygen atoms, silicon atoms, and carbonyl groups within the backbone of the hydrocarbyl residue. In some embodiments, the poly(arylene ether) block comprises 2,6-dimethyl-1,4-phenylene ether repeating units, that is, repeating units having the structure

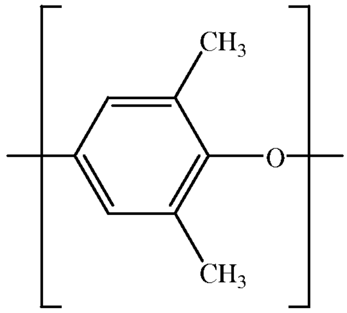,

or 2,3,6-trimethyl-1,4-phenylene ether repeating units, or a combination thereof.

The polysiloxane block is a residue of the hydroxyaryl-terminated polysiloxane. In some embodiments, the polysiloxane block comprises repeating units having the structure

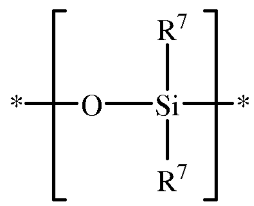

wherein each occurrence of $R^7$ is independently hydrogen, $C_1$-$C_{12}$ hydrocarbyl or $C_1$-$C_{12}$ halohydrocarbyl; and the polysiloxane block further comprises a terminal unit having the structure

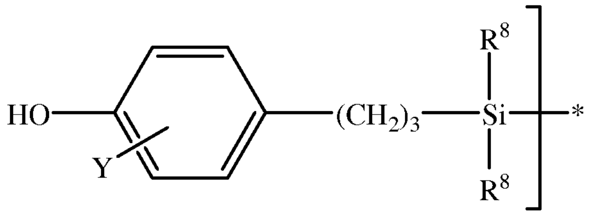

wherein Y is hydrogen, $C_1$-$C_{12}$ hydrocarbyl, $C_1$-$C_{12}$ hydrocarbyloxy, or halogen, and wherein each occurrence of $R^8$ is independently hydrogen, $C_1$-$C_{12}$ hydrocarbyl or $C_1$-$C_{12}$ halohydrocarbyl. In some embodiments, each occurrence of $R^8$ is independently $C_1$-$C_6$ alkyl, specifically $C_1$-$C_3$ alkyl, more specifically methyl. In some embodiments, the polysiloxane repeating units comprise dimethylsiloxane (-$Si(CH_3)_2O$-) units. In some embodiments, the polysiloxane block has the structure

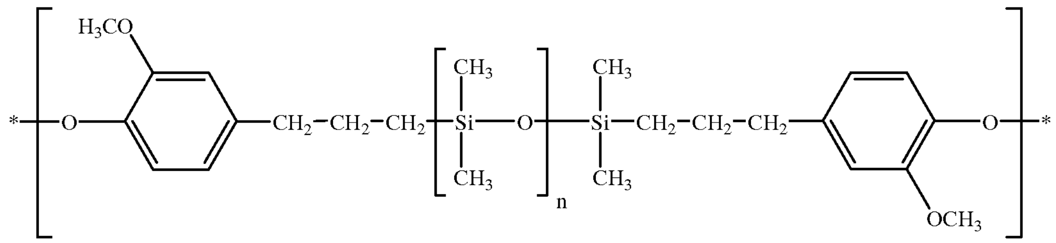

wherein n is 35 to 60.

In some embodiments, the poly(arylene ether) block comprises arylene ether repeating units having the structure

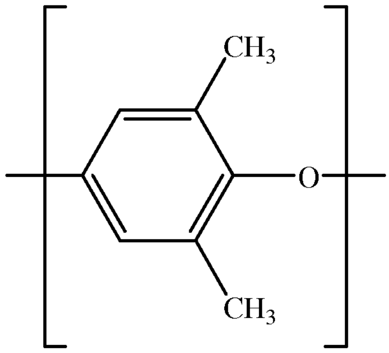

;

and the polysiloxane block has the structure

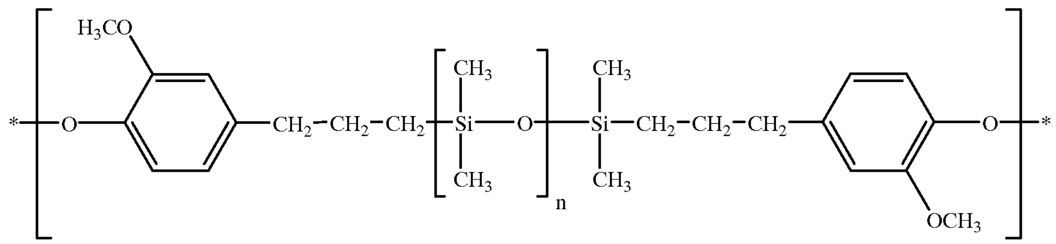

wherein n is 35 to 60; and the poly(arylene ether)-polysiloxane block copolymer reaction product has a number average molecular weight of 10,000 to 30,000 atomic mass units.

The hydroxyaryl-terminated polysiloxane comprises at least one hydroxyaryl terminal group. In some embodiments, the hydroxyaryl-terminated polysiloxane has a single hydroxyaryl terminal group, in which case a poly(arylene ether)-polysiloxane diblock copolymer is formed. In other embodiments, the hydroxyaryl-terminated polysiloxane has two hydroxyaryl terminal groups, in which case in which case poly(arylene ether)-polysiloxane diblock and/or triblock copolymers are formed. It is also possible for the hydroxyaryl-terminated polysiloxane to have a branched structure that allows three or more hydroxyaryl terminal groups and the formation of corresponding branched copolymers.

As noted above, the polysiloxane block can comprise, on average, about 35 to about 80 siloxane repeating units. Within this range, the number of siloxane repeating units can be about 35 to about 60, more specifically about 40 to about 50. The number of siloxane repeating units in the polysiloxane block is essentially unaffected by the copolymerization and isolation conditions, and it is therefore equivalent to the number of siloxane repeating units in the hydroxyaryl-terminated polysiloxane starting material. When not otherwise known, the average number of siloxane repeating units per hydroxylaryl-terminate polysiloxane molecule can be determined by NMR methods that compare the intensity of signals associated with the siloxane repeating units to those associated with the hydroxyaryl terminal groups. For example, when the hydroxyaryl-terminated polysiloxane is a eugenol-capped polydimethylsiloxane, it is possible to determine the average number of siloxane repeating units by a proton nuclear magnetic resonance ($^1$H NMR) method in which integrals for the protons of the dimethylsiloxane resonance and the protons of the eugenol methoxy group are compared.

When prepared by the oxidative copolymerization method, the poly(arylene ether)-polysiloxane block copolymer reaction product can comprise about 1 to about 8 weight percent siloxane repeating units and 92 to 99 weight percent arylene ether repeating units, based on the total weight of the poly(arylene ether)-polysiloxane block copolymer reaction product. Within these ranges, the weight percent of siloxane repeating units can be about 3 to about 7 weight percent, specifically about 4 to about 6 weight percent, more specifically about 4 to about 5 weight percent; and the weight percent arylene ether repeating units can be about 93 to about 97 weight percent, specifically about 94 to about 96 weight percent, more specifically about 95 to about 96 weight percent.

When prepared by the oxidative copolymerization method, the poly(arylene ether)-polysiloxane block copolymer reaction product can have a weight average molecular weight of at least about 30,000 atomic mass units. In some embodiments the weight average molecular weight is about 30,000 to about 150,000 atomic mass units, specifically about 35,000 to about 120,000 atomic mass units, more specifically about 40,000 to about 90,000 atomic mass units, even more specifically about 45,000 to about 70,000 atomic mass units. In some embodiments, the poly(arylene ether)-polysiloxane block copolymer reaction product has a number average molecular weight of about 10,000 to about 50,000 atomic mass units, specifically about 10,000 to about 30,000 atomic mass units, more specifically about 14,000 to about 24,000 atomic mass units. A detailed chromatographic method for determining molecular weight is described in the working examples below.

When prepared by the oxidative copolymerization method, the poly(arylene ether)-polysiloxane block copolymer reaction product can include relatively small amounts of very low molecular weight species. Thus, in some embodiments, the poly(arylene ether)-polysiloxane block copolymer reaction product comprises less than 25 weight percent of molecules having a molecular weight less than 10,000 atomic mass units, specifically 5 to 25 weight percent of molecules having a molecular weight less than 10,000 atomic mass units, more specifically 7 to 21 weight percent of molecules having a molecular weight less than 10,000 atomic mass units. In some embodiments, the molecules having a molecular weight less than 10,000 atomic mass units comprise, on average, 5 to 10 weight percent siloxane repeating units, specifically 6 to 9 weight percent siloxane repeating units.

Similarly, the poly(arylene ether)-polysiloxane block copolymer reaction product can also include relatively small amounts of very high molecular weight species. Thus, in some embodiments, the poly(arylene ether)-polysiloxane block copolymer reaction product comprises less than 25 weight percent of molecules having a molecular weight greater than 100,000 atomic mass units, specifically 5 to 25 weight percent of molecules having a molecular weight greater than 100,000 atomic mass units, more specifically 7 to 23 weight percent of molecules having a molecular weight greater than 100,000 atomic mass units. In some embodiments, the molecules having a molecular weight greater than 100,000 atomic mass units comprise, on average, 3 to 6 weight percent siloxane repeating units, specifically 4 to 5 weight percent siloxane repeating units.

In some embodiments, the poly(arylene ether)-polysiloxane block copolymer reaction product has an intrinsic viscosity of at least about 0.3 deciliter per gram, as measured at 25°C in chloroform. The intrinsic viscosity can be about 0.3 to about 0.6 deciliter pre gram, specifically about 0.3 to about 0.5 deciliter per gram, still more specifically about 0.31 to about 0.55 deciliter per gram, yet more specifically about 0.35 to about 0.47 deciliter per gram.

One indication of the efficiency with which the oxidative copolymerization method incorporates the hydroxyaryl-terminated polysiloxane into the block copolymer is the low concentration of so-called poly(arylene ether) "tail" groups. In a homopolymerization of 2,6-dimethylphenol, a large fraction of product molecules have a so-called head-to-tail structure in which the linear product molecule is terminated on one end by a 3,5-dimethyl-4-hydroxyphenyl "head" and on the other end by a 2,6-dimethylphenoxy "tail". Thus, when the monohydric phenol consists of 2,6-dimethylphenol, the poly(arylene ether) tail group has the structure

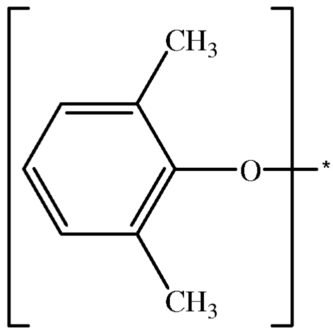

wherein the 3-, 4-, and 5- positions of the ring are substituted with hydrogen atoms (that is, the term 2,6-dimethylphenoxy does not encompass divalent 2,6-dimethyl-1,4-phenylene ether groups). In a copolymerization of monohydric phenol with hydroxyaryl-terminated polysiloxane, incorporation of the hydroxyaryl-terminated polysiloxane into block copolymer will reduce the concentration of arylene ether "tail" groups. When the monohydric phenol consists of 2,6-dimethylphenol, and particularly when the poly(arylene ether)-polysiloxane block copolymer reaction product is the sole source of arylene ether units in the composition, the composition can comprise less than or equal to 0.4 weight percent, specifically 0.2 to 0.4 weight percent, of 2,6-dimethylphenoxy groups, based on the weight of the composition. When the monohydric phenol consists of 2,6-dimethylphenol, and particularly when the composition comprises poly(arylene ether) in addition to that present in the poly(arylene ether)-polysiloxane block copolymer reaction product, the composition can comprise less than or equal to 1 weight percent, specifically 0.2 to 1 weight percent, of 2,6-dimethylphenoxy groups, based on the weight of the composition.

The poly(arylene ether)-polysiloxane block copolymer reaction product can further include groups derived from a diphenoquinone, which is itself an oxidation product of the monohydric phenol. For example, when the monohydric phenol is 2,6-dimethylphenol, the poly(arylene ether)-polysiloxane block copolymer reaction product can comprise 1.1 to 2.0 weight percent of 2,6-dimethyl-4-(3,5-dimethyl-4-hydroxyphenyl)phenoxy groups.

The poly(arylene ether)-polysiloxane block copolymer reaction product can be isolated from solution by an isolation procedure that minimizes volatile and nonvolatile contaminants. For example, in some embodiments, the poly(arylene ether)-polysiloxane block copolymer reaction product comprises less than or equal to 1 weight percent of total volatiles, specifically 0.2 to 1 weight percent of total volatiles, determined according to the procedure in the working examples below. In some embodiments, the monomer mixture is oxidatively copolymerized in the presence of a catalyst comprising a metal (such as copper or manganese), and the poly(arylene ether)-polysiloxane block copolymer reaction product comprises less than or equal to 100 parts per million by weight of the metal, specifically 0.5 to 100 parts per million by weight of the metal, more specifically 10 to 50 parts per million by weight of the metal, even more specifically 20 to 50 parts per million by weight of the metal.

The poly(arylene ether)-polysiloxane block copolymer reaction product is prepared by a method comprising oxidatively copolymerizing the monohydric phenol and the hydroxyaryl-terminated polysiloxane to form a poly(arylene ether)-polysiloxane block copolymer reaction product. The oxidative copolymerization can be initiated in the presence of at least 50 weight percent of the hydroxyaryl-terminated polysiloxane and less than or equal to 50 weight percent of the monohydric phenol. In some embodiments, the oxidative copolymerization is initiated in the presence of at least 80 weight percent of the hydroxyaryl-terminated polysiloxane, specifically at least 90 weight percent of the hydroxyaryl-terminated polysiloxane, more specifically 100 weight percent of the hydroxyaryl-terminated polysiloxane.

The hydroxyaryl-terminated polysiloxane can comprise, on average, about 35 to about 80 siloxane repeating units. In some embodiments, the hydroxyaryl-terminated polysiloxane comprises, on average, about 40 to about 70 siloxane repeating units, specifically about 40 to about 60 siloxane repeating units, more specifically about 40 to about 50 siloxane repeating units. The hydroxyaryl-terminated polysiloxane can constitute about 1 to about 8 weight percent, specifically about 3 to about 8 weight percent, of the combined weight of the monohydric phenol and the hydroxyaryl-terminated polysiloxane.

The oxidative copolymerization can be conducted with a reaction time greater than or equal to 110 minutes. The reaction time is the elapsed time between initiation and termination of oxygen flow. (Although, for brevity, the description herein repeatedly refers to "oxygen" or "oxygen flow", it will be understood that any oxygen-containing gas, including air, can be used as the oxygen source.) In some embodiments, the reaction time is 110 to 300 minutes, specifically 140 to 250 minutes, more specifically 170 to 220 minutes.

The oxidative copolymerization can include a "build time" which is the time between completion of monomer addition and termination of oxygen flow. In some embodiments, the reaction time comprises a build time of 80 to 160 minutes. In some embodiments, the reaction temperature during at least part of the build time can be 40 to 60°C, specifically 45 to 55°C.

After termination of the copolymerization reaction, the product poly(arylene ether)-polysiloxane block copolymer reaction product can be isolated from solution using methods known in the art for isolating poly(arylene ether)s from solution. For example, the poly(arylene ether)-polysiloxane block copolymer reaction product can be isolated by precipitation with an antisolvent, such as a $C_1$-$C_6$ alkanol, including methanol, ethanol, n-propanol, and isopropanol. The present inventors have observed that the use of isopropanol is advantageous because it is a good solvent for unreacted hydroxyaryl-terminated polysiloxane. Therefore, precipitation and washing with isopropanol substantially removes hydroxyaryl-terminated polysiloxane from the isolated product. As an alternative to precipitation, the poly(arylene ether)-polysiloxane block copolymer reaction product can be isolated by direct isolation methods, including devolatilizing extrusion. In some embodiments, the composition comprises less than or equal to 1.5 weight percent of the hydroxyaryl-terminated polysiloxane, specifically less than or equal to 0.5 weight percent of the hydroxyaryl-terminated polysiloxane, based on the total weight of the composition. Precipitation of the poly(arylene ether)-polysiloxane block copolymer reaction product in isopropanol has been observed to be effective for separating hydroxyaryl-terminated polysiloxane from the reaction product.

In some embodiments, the poly(arylene ether)-polysiloxane block copolymer reaction product incorporates greater than 75 weight percent, of the hydroxyaryl-terminated polysiloxane starting material into the poly(arylene ether)-polysiloxane block copolymer. Specifically, the amount of hydroxyaryl-terminated polysiloxane incorporated into the poly(arylene ether)-polysiloxane block copolymer can be at least 80 weight percent, more specifically at least 85 weight percent, still more specifically at least 90 weight percent, yet more specifically at least 95 weight percent.

In a very specific procedure for preparing the poly(arylene ether)-polysiloxane block copolymer reaction product, the monohydric phenol is 2,6-dimethylphenol; the hydroxyaryl-terminated polysiloxane is a eugenol-capped polydimethylsiloxane comprising 35 to 60 dimethylsiloxane units; the oxidative copolymerization is initiated in the presence of at least 90 weight percent of the hydroxyaryl-terminated polysiloxane and 2 to 20 weight percent of the monohydric phenol; the oxidative copolymerization is conducted with a reaction time of 170 to 220 minutes; and the hydroxyaryl-terminated polysiloxane constitutes 2 to 7 weight percent of the combined weight of the monohydric phenol and the capped polysiloxane.

Additional details relating to the preparation, characterization, and properties of the poly(arylene ether)-polysiloxane block copolymer reaction product can be found in US2009-0318635 A1.

In addition to the oxidative copolymerization method described above, a polyesterification method can be used to form an additional poly(arylene ether)-polysiloxane block copolymer. When the polyesterification method is used, the product is a multiblock copolymer comprising at least two poly(arylene ether) blocks and at least two polysiloxane blocks. Thus, in some embodiments, the poly(arylene ether)-polysiloxane block copolymer comprises a poly(arylene ether)-polysiloxane multiblock copolymer that is the product of copolymerizing a hydroxy-diterminated poly(arylene ether), a hydroxyaryl-diterminated polysiloxane, and an aromatic diacid chloride.

The hydroxy-diterminated poly(arylene ether) can have the structure

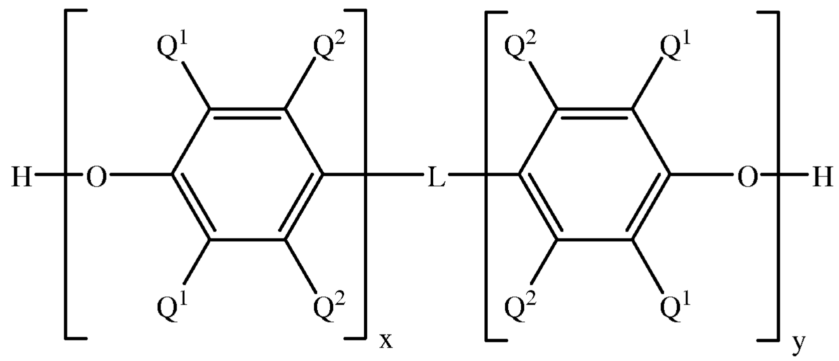

wherein x and y are each independently 0 to about 100, provided that the sum of x and y is at least 2; each occurrence of $Q^1$ is independent selected from the group consisting of halogen, $C_1$-$C_{12}$ hydrocarbylthio, $C_1$-$C_{12}$ hydrocarbyloxy, $C_2$-$C_{12}$ halohydrocarbyloxy wherein at least two carbon atoms separate the halogen and oxygen atoms, and unsubstituted or substituted $C_1$-$C_{12}$ hydrocarbyl provided that the hydrocarbyl group is not tertiary hydrocarbyl; each occurrence of $Q^2$ is independently selected from the group consisting of hydrogen, halogen, $C_1$-$C_{12}$ hydrocarbylthio, $C_1$-$C_{12}$ hydrocarbyloxy, $C_2$-$C_{12}$ halohydrocarbyloxy wherein at least two carbon atoms separate the halogen and oxygen atoms, and unsubstituted or substituted $C_1$-$C_{12}$ hydrocarbyl provided that the hydrocarbyl group is not tertiary hydrocarbyl; and L has the structure

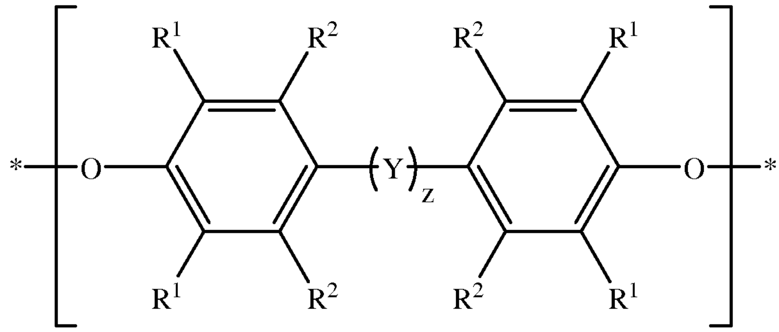

wherein each occurrence of $R^1$ and $R^2$ is independently selected from the group consisting of hydrogen, halogen, $C_1$-$C_{12}$ hydrocarbylthio, $C_1$-$C_{12}$ hydrocarbyloxy, $C_2$-$C_{12}$ halohydrocarbyloxy wherein at least two carbon atoms separate the halogen and oxygen atoms, and unsubstituted or substituted $C_1$-$C_{12}$ hydrocarbyl provided that the hydrocarbyl group is not tertiary hydrocarbyl; z is 0 or 1; and Y has a structure selected from the group consisting of

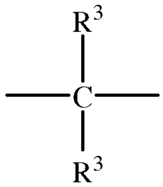 , 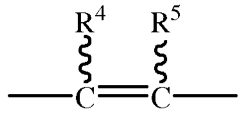 , 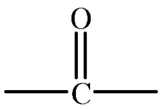 , 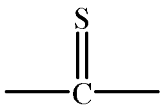 , 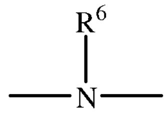 ,

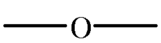 , 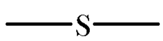 , 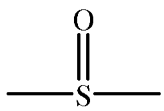 , and 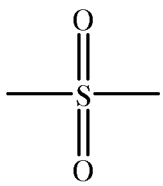 ,

wherein each occurrence of $R^3$-$R^6$ is independently hydrogen or $C_1$-$C_{12}$ hydrocarbyl.

In some embodiments, the hydroxy-diterminated poly(arylene ether) has the structure

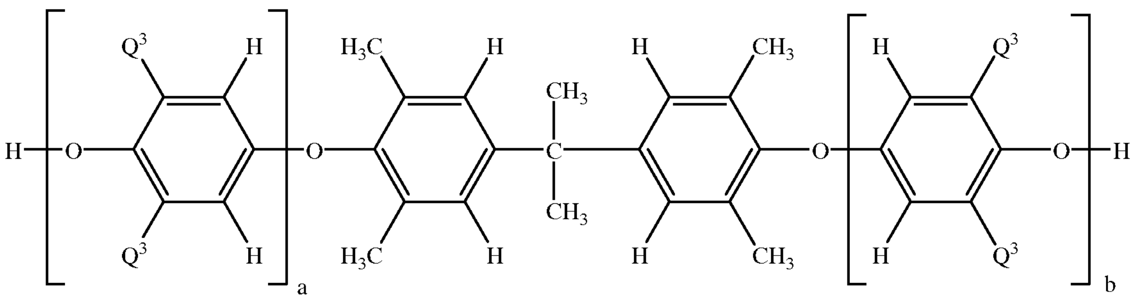

wherein each occurrence of $Q^3$ is independently methyl or di-n-butylaminomethyl; and each occurrence of a and b is independently 0 to about 100, provided that the sum of a and b is, on average, about 3 to about 100. In some embodiments, the sum of a and b is, on average, about 4 to about 30.

The aromatic diacid chloride used in the polyesterification method can be, for example, terephthaloyl chloride, isophthaloyl chloride, 4,4'-biphenyldicarbonyl chloride, 3,3'-biphenyldicarbonyl chloride, 3,4'-biphenyldicarbonyl chloride, 4,4'-oxybis(benzoyl chloride), 3,3'-oxybis(benzoyl chloride), 3,4'-oxybis(benzoyl chloride), 4,4'-sulfonylbis(benzoyl chloride), 3,3'-sulfonylbis(benzoyl chloride), 3,4'-sulfonylbis(benzoyl chloride), naphthalene-2,6-dicarbonyl chloride, or a mixture thereof. In some embodiments, the aromatic diacid chloride comprises terephthaloyl chloride.

As noted above, when the poly(arylene ether)-polysiloxane multiblock copolymer is prepared by the polyesterification method, it comprises at least two poly(arylene ether) blocks and at least two polysiloxane blocks. However, it can contain many more of each type of block. For example, in some embodiments, the poly(arylene ether)-polysiloxane multiblock copolymer comprises about 5 to about 25 poly(arylene ether) blocks and about 10 to about 30 polysiloxane

blocks.

One advantage of the present compositions is that they exhibit substantial property improvements relative to corresponding compositions substituting poly(arylene ether) for the poly(arylene ether)-polysiloxane block copolymer of the present composition. It is surprising that these improvements can be achieved at a relatively low total siloxane loading. For example, in some embodiments, the poly(arylene ether)-polysiloxane block copolymer provides about 1 to about 5 weight percent polysiloxane to the composition. Within the range of about 1 to about 5 weight percent, the polysiloxane contribution of the poly(arylene ether)-polysiloxane block copolymer can be about 2 to about 4 weight percent, specifically about 2 to about 3 weight percent.

Additional details relating to the polyesterification method and the poly(arylene ether)-polysiloxane multiblock copolymer prepared thereby can be found in US2011-0152471 A1.

The compatibilized blend is prepared from 40 to 60 parts by weight of the polyamide and 40 to 60 parts by weight of the poly(arylene ether)-polysiloxane block copolymer, based on the total weight of the polyamide and the poly(arylene ether)-polysiloxane block copolymer. Within the range of 40 to 60 parts by weight, the polyamide amount can be at least about 45 parts by weight. Within the range of 40 to 60 parts by weight, the poly(arylene ether)-polysiloxane block copolymer amount can be up to about 55 parts by weight.

The composition comprises 75 to 90 weight percent of the compatibilized blend, based on the total weight of the composition. The amount of the compatibilized blend is calculated as the sum of all polyamides, all poly(arylene ether)-polysiloxane block copolymers, any optional poly(arylene ether)s, and any optional compatibilizing agents used to form the compatibilized blend. Within the range of 75 to 90 weight percent, the poly(arylene ether) amount can be 75 to about 87 weight percent, more specifically about 80 to about 87 weight percent.

In some embodiments, a compatibilizing agent is used to facilitate formation of the compatibilized blend of the polyamide and the poly(arylene ether)-polysiloxane block copolymer. As used herein, the expression "compatibilizing agent" refers to a polyfunctional compound that interacts with the poly(arylene ether)-polysiloxane block copolymer, the polyamide resin, or both. This interaction may be chemical (for example, grafting) and/or physical (for example, affecting the surface characteristics of the dispersed phases). In either instance the resulting compatibilized blend exhibits improved compatibility, particularly as evidenced by enhanced impact strength, mold knit line strength, and/or tensile elongation. As used herein, the expression "compatibilized blend" refers to compositions that have been physically and/or chemically compatibilized with a compatibilizing agent, as well as blends of poly(arylene ether)-polysiloxane block copolymers and polyamides that are physically compatible without such agents (as, for example, from compatibility-enhancing dibutylaminomethyl substituents on the poly(arylene ether)-polysiloxane block copolymer).

Examples of compatibilizing agents that may be employed include liquid diene polymers, epoxy compounds, oxidized polyolefin wax, quinones, organosilane compounds, polyfunctional compounds, functionalized poly(arylene ether)s, functionalized poly(arylene ether)-polysiloxane block copolymers, and combinations thereof. Compatibilizing agents are further described in U.S. Patent Nos. 5,132,365 to Gallucci and 6,593,411 to Koevoets et al., as well as U.S. Patent Application Publication No. US 2003/0166762 A1 of Koevoets et al.

In some embodiments, the compatibilizing agent comprises a polyfunctional compound. Polyfunctional compounds that may be employed as a compatibilizing agent are typically of three types. The first type of polyfunctional compound has in the molecule both (a) a carbon-carbon double bond or a carbon-carbon triple bond and (b) at least one carboxylic acid, anhydride, amide, ester, imide, amino, epoxy, orthoester, or hydroxy group. Examples of such polyfunctional compounds include maleic acid; maleic anhydride; fumaric acid; glycidyl acrylate, itaconic acid; aconitic acid; maleimide; maleic hydrazide; reaction products resulting from a diamine and maleic anhydride, maleic acid, fumaric acid, etc.; dichloro maleic anhydride; maleic acid amide; unsaturated dicarboxylic acids (for example, acrylic acid, butenoic acid, methacrylic acid, ethylacrylic acid, pentenoic acid, decenoic acids, undecenoic acids, dodecenoic acids, linoleic acid, etc.); esters, acid amides or anhydrides of the foregoing unsaturated carboxylic acids; unsaturated alcohols (for example, alkanols, crotyl alcohol, methyl vinyl carbinol, 4-pentene-1-ol, 1,4-hexadiene-3-ol, 3-butene-1,4-diol, 2,5-dimethyl-3-hexene-2,5-diol, and alcohols of the formula $C_nH_{2n-5}OH$, $C_nH_{2n-7}OH$ and $C_nH_{2n-9}OH$, wherein n is a positive integer less than or equal to 30); unsaturated amines resulting from replacing from replacing the -OH group(s) of the above unsaturated alcohols with $-NH_2$ group(s); functionalized diene polymers and copolymers; and combinations comprising one or more of the foregoing. In one embodiment, the compatibilizing agent comprises maleic anhydride and/or fumaric acid.

The second type of polyfunctional compatibilizing agent has both (a) a group represented by the formula (OR) wherein R is hydrogen or an alkyl, aryl, acyl or carbonyl dioxy group and (b) at least two groups each of which may be the same or different selected from carboxylic acid, acid halide, anhydride, acid halide anhydride, ester, orthoester, amide, imido, amino, and various salts thereof. Typical of this group of compatibilizing agents are the aliphatic polycarboxylic acids, acid esters, and acid amides represented by the formula:

$$(R^IO)_mR'\,(COOR^{II})_n(CONR^{III}R^{IV})_s$$

wherein R' is a linear or branched chain, saturated aliphatic hydrocarbon having 2 to 20, or, more specifically, 2 to 10, carbon atoms; $R^1$ is hydrogen or an alkyl, aryl, acyl, or carbonyl dioxy group having 1 to 10, or, more specifically, 1 to 6, or, even more specifically, 1 to 4 carbon atoms; each $R^{II}$ is independently hydrogen or an alkyl or aryl group having 1 to 20, or, more specifically, 1 to 10 carbon atoms; each $R^{III}$ and $R^{IV}$ are independently hydrogen or an alkyl or aryl group having 1 to 10, or, more specifically, 1 to 6, or, even more specifically, 1 to 4, carbon atoms; m is equal to 1 and (n + s) is greater than or equal to 2, or, more specifically, equal to 2 or 3, and n and s are each greater than or equal to zero and wherein ($OR^I$) is alpha or beta to a carbonyl group and at least two carbonyl groups are separated by 2 to 6 carbon atoms. Obviously, $R^I$, $R^{II}$, $R^{III}$, and $R^{IV}$ cannot be aryl when the respective substituent has less than 6 carbon atoms.

Suitable polycarboxylic acids include, for example, citric acid, malic acid, and agaricic acid, including the various commercial forms thereof, such as for example, the anhydrous and hydrated acids; and combinations comprising one or more of the foregoing. In one embodiment, the compatibilizing agent comprises citric acid. Illustrative of esters useful herein include, for example, acetyl citrate, monostearyl and/or distearyl citrates, and the like. Suitable amides useful herein include, for example, N,N'-diethyl citric acid amide; N-phenyl citric acid amide; N-dodecyl citric acid amide; N,N'-didodecyl citric acid amide; and N-dodecyl malic acid. Derivatives include the salts thereof, including the salts with amines and the alkali and alkaline metal salts. Examples of suitable salts include calcium malate, calcium citrate, potassium malate, and potassium citrate.

The third type of polyfunctional compatibilizing agent has in the molecule both (a) an acid halide group and (b) at least one carboxylic acid, anhydride, ester, epoxy, orthoester, or amide group, preferably a carboxylic acid or anhydride group. Examples of compatibilizing agents within this group include trimellitic anhydride acid chloride, chloroformyl succinic anhydride, chloroformyl succinic acid, chloroformyl glutaric anhydride, chloroformyl glutaric acid, chloroacetyl succinic anhydride, chloroacetylsuccinic acid, trimellitic acid chloride, and chloroacetyl glutaric acid. In one embodiment, the compatibilizing agent comprises trimellitic anhydride acid chloride.

The foregoing compatibilizing agents may be added directly to the melt blend or pre-reacted with either or both of the poly(arylene ether)-polysiloxane block copolymer and polyamide, as well as with any other resinous materials employed in the preparation of the composition. With many of the foregoing compatibilizing agents, particularly the polyfunctional compounds, even greater improvement in compatibility is found when at least a portion of the compatibilizing agent is pre-reacted, either in the melt or in a solution of a suitable solvent, with all or a part of the poly(arylene ether)-polysiloxane block copolymer. It is believed that such pre-reacting may cause the compatibilizing agent to react with and consequently functionalize the poly(arylene ether)-polysiloxane block copolymer. For example, the poly(arylene ether)-polysiloxane block copolymer may be pre-reacted with maleic anhydride to form an anhydride-functionalized poly(arylene ether)-polysiloxane block copolymer that has improved compatibility with the polyamide compared to a non-functionalized poly(arylene ether)-polysiloxane block copolymer.

Where the compatibilizing agent is employed in the preparation of the compositions, the amount used will be dependent upon the specific compatibilizing agent chosen and the specific polymeric system to which it is added. In some embodiments, the compatibilizing agent amount is about 0.1 to about 1 weight percent, specifically about 0.2 to about 0.8 weight percent, more specifically about 0.3 to about 0.6 weight percent, based on the total weight of the composition.

The composition can, optionally, further include a poly(arylene ether). As used herein, the term "poly(arylene ether)" is distinct from the term "poly(arylene ether)-polysiloxane block copolymer". The term "poly(arylene ether)" refers to a polymer comprising a plurality of arylene ether units and excluding siloxane units. The poly(arylene ether) can be, for example, a homopolymer formed by oxidative polymerization of a single monohydric phenol; a random copolymer formed by oxidative copolymerization of a monohydric phenol (including those described above in the context of the oxidative copolymerization method for production of the poly(arylene ether)-polysiloxane block copolymer) and a second phenol that can be a different monohydric phenol or a dihydric phenol or a polyhydric phenol; or a block copolymer formed by sequential oxidative polymerization of at least two monohydric phenols. The poly(arylene ether) can be provided as part of the poly(arylene ether)-polysiloxane block copolymer reaction product described above. Alternatively or in addition, the poly(arylene ether) can be added separately.

Suitable poly(arylene ether)s include those characterized by a weight average molecular weight and a peak molecular weight, wherein a ratio of the weight average molecular weight to the peak molecular weight is about 1.3 : 1 to about 4 : 1. These poly(arylene ether)s and methods for their preparation are described in copending U.S. Provisional Patent Application Serial No. 61/224,936, filed July 13, 2009. Suitable poly(arylene ether)s further include poly(2,6-dimethyl-1,4-phenylene ether)s, wherein a purified sample of poly(2,6-dimethyl-1,4-phenylene ether) prepared by dissolution of the as-synthesized poly(2,6-dimethyl-1,4-phenylene ether) in toluene, precipitation from methanol, reslurry, and isolation has a monomodal molecular weight distribution in the molecular weight range of 250 to 1,000,000 atomic mass units and comprises less than or equal to 2.2 weight percent of poly(2,6-dimethyl-1,4-phenylene ether) having a molecular weight more than fifteen times the number average molecular weight of the entire purified sample. When the purified sample is separated into six equal poly(2,6-dimethyl-1,4-phenylene ether) weight fractions of decreasing molecular weight, it comprises a first, highest molecular weight fraction comprising at least 10 mole percent of poly(2,6-dimethyl-1,4-phenylene ether) comprising a terminal morpholine-substituted phenoxy group. These poly(arylene ether)s and their preparation are described in copending U.S. Nonprovisional Patent Application Serial No. 12/495,980 filed July 1, 2008.

When present, the poly(arylene ether) can be included in the composition in an amount of about 1 to about 35 weight percent, specifically about 5 to about 30 weight percent, more specifically about 10 to about 25 weight percent, based on the total weight of the composition. The poly(arylene ether) is considered part of the compatibilized blend.

The composition comprises a metal dialkylphosphinate. In some embodiments, the metal dialkyl phosphinate has the formula

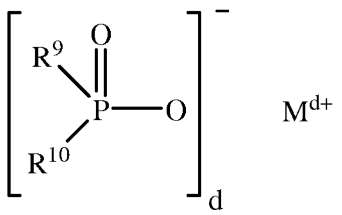

wherein $R^9$ and $R^{10}$ are independently $C_1$-$C_6$ alkyl, phenyl, or aryl; M is calcium, magnesium, aluminum, or zinc; and d is 2 or 3. The metal dialkyl phosphinate comprises at least one compound where $R^9$ and $R^{10}$ are ethyl, M is aluminum, and d is 3; that is, the metal dialkylphosphinate is aluminum tris(diethylphosphinate).

The composition comprises the metal dialkylphosphinate in an amount of 2 to 10 weight percent, specifically about 4 to about 8 weight percent.

In addition to the compatibilized blend and the metal dialkylphosphinate, the composition comprises glass fibers. Suitable glass fibers include those having a diameter of about 7 to about 20 micrometers, specifically about 10 to about 15 micrometers. The glass fibers can comprise a coating (also known as sizing) to improve their compatibility with the polyamide. The glass fibers are used in an amount of 5 to 15 weight percent, based on the total weight of the composition.

In the present invention, the composition has the following characteristics. It comprises 75 to 90 weight percent of the compatibilized blend of a polyamide and a poly(arylene ether)-polysiloxane block copolymer, and 2 to 10 weight percent of the metal dialkylphosphinate. It further comprises 5 to 15 weight percent glass fibers. The compatibilized blend is the product of compatibilizing 40 to 60 parts by weight of the polyamide and 40 to 60 parts by weight of the poly(arylene ether)-polysiloxane block copolymer, based on the total weight of the polyamide and the poly(arylene ether)-polysiloxane block copolymer. The polyamide comprises polyamide-6,6. The poly(arylene ether)-polysiloxane block copolymer comprises the product of a process comprising oxidatively copolymerizing of a monomer mixture comprising 90 to 99 parts by weight of a monohydric phenol and 1 to 10 parts by weight of a hydroxyaryl-terminated polysiloxane, based on the total weight of the monohydric phenol and the hydroxyaryl-terminated polysiloxane. And the metal dialkylphosphinate comprises aluminum tris(diethylphosphinate).

The composition can exhibit good flame retardancy. For example, in some embodiments, the composition exhibits a flame retardancy rating of V-1 or V-0 at a thickness of 2 millimeters or 1.6 millimeters or 1 millimeter, as measured according to Underwriter's Laboratory Bulletin 94, "Tests for Flammability of Plastic Materials, UL 94", Vertical Burning Flame Test. This test is described in the working examples below.

The composition can also exhibit good ductility. One objective measure of ductility is notched Izod impact strength. In some embodiments, the composition exhibits a notched Izod impact strength of at least 5 kilojoules/meter$^2$, specifically 5 to about 8 kilojoules/meter$^2$, as measured at 23°C according to ISO 180/A1. Another objective measure of ductility is tensile elongation at break. In some embodiments, the composition exhibits a tensile elongation at break of at least 1.5 percent, specifically 1.5 to about 5 percent, more specifically 1.5 to about 4 percent, as measured at 23°C according to ASTM D638-08.

One embodiment is a method of forming a composition, the method comprising: melt blending 35 to 45 weight percent of a polyamide comprising polyamide-6,6, 35 to 47 weight percent of a poly(arylene ether)-polysiloxane block copolymer, 2 to 10 weight percent of a metal dialkylphosphinate comprising aluminum tris(diethylphosphinate), and 5 to 15 weight percent glass fibers to form a composition;wherein the poly(arylene ether)-polysiloxane block copolymer comprises the product of a process comprising oxidatively copolymerizing of a monomer mixture comprising 90 to 99 parts by weight of a monohydric phenol and 1 to 10 parts by weight of a hydroxyaryl-terminated polysiloxane, based on the total weight of the monohydric phenol and the hydroxyaryl-terminated polysiloxane; wherein all weight percents are based on the total weight of the composition. Within the range of 2 to 10 weight percent, the metal dialkylphosphinate amount can be about 4 to about 8 weight percent. All of the compositional variations described above in the context of the composition apply as well to the method of forming the composition.

Melt blending is typically conducted at a temperature of about 270 to about 320°C, specifically about 280 to

about 310°C, more specifically about 290 to about 300°C. Apparatus for melt blending is known in the art and includes, for example, Brabender mixers and extruders, including single-screw and twin-screw extruders.

In the present invention, the method has the following characteristics. The polyamide comprises polyamide-6,6 and the polyamide amount is 35 to 45 weight percent. The poly(arylene ether)-polysiloxane block copolymer is the product of a process comprising oxidatively copolymerizing of a monomer mixture comprising 90 to 99 parts by weight of a monohydric phenol and 1 to 10 parts by weight of a hydroxyaryl-terminated polysiloxane, based on the total weight of the monohydric phenol and the hydroxyaryl-terminated polysiloxane. The poly(arylene ether)-polysiloxane block copolymer amount is 35 to 47 weight percent. The metal dialkylphosphinate comprises aluminum tris(diethylphosphinate). The metal dialkylphosphinate is used in an amount of 2 to 10 weight percent. The method further comprises blending 5 to 15 weight percent glass fibers with the polyamide, the poly(arylene ether)-polysiloxane block copolymer, and the metal dialkylphosphinate.

Other embodiments include compositions prepared by any of the above-described methods.

Still other embodiments include articles comprising the composition. Useful articles that can be prepared from the composition include electrical and automotive connectors, electrical devices such as switches, and electrical enclosures such as junction boxes, lighting enclosures, and sockets. Injection molding is a presently preferred method of forming articles from the composition.

The invention includes at least the following embodiments.

Embodiment 1: A composition, comprising: 75 to 90 weight percent of a compatibilized blend of a polyamide comprising polyamide-6,6, and a poly(arylene ether)-polysiloxane block copolymer, the compatibilized blend being the product of compatibilizing 40 to 60 parts by weight of the polyamide and 40 to 60 parts by weight of the poly(arylene ether)-polysiloxane block copolymer, based on the total weight of the polyamide and the poly(arylene ether)-polysiloxane block copolymer; 2 to 10 weight percent of a metal dialkylphosphinate comprising aluminum tris(diethylphosphinate); and 5 to 15 weight percent glass fibers; wherein the poly(arylene ether)-polysiloxane block copolymer comprises the product of a process comprising oxidatively copolymerizing of a monomer mixture comprising 90 to 99 parts by weight of a monohydric phenol and 1 to 10 parts by weight of a hydroxyaryl-terminated polysiloxane; wherein all weight percents are based on the total weight of the composition.

Embodiment 2: The composition of embodiment 1 , wherein the hydroxyaryl-diterminated polysiloxane comprises a plurality of repeating units having the structure

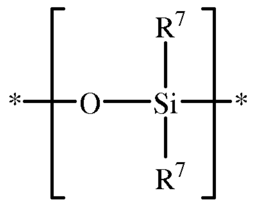

wherein each occurrence of $R^7$ is independently hydrogen, $C_1$-$C_{12}$ hydrocarbyl or $C_1$-$C_{12}$ halohydrocarbyl; and two terminal units having the structure

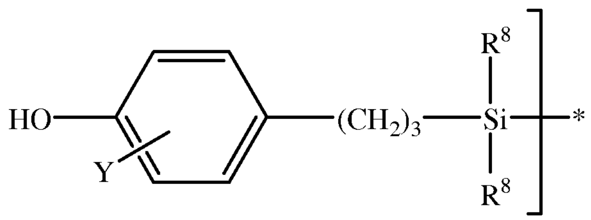

wherein Y is hydrogen, $C_1$-$C_{12}$ hydrocarbyl, $C_1$-$C_{12}$ hydrocarbyloxy, or halogen, and wherein each occurrence of $R^8$ is independently hydrogen, $C_1$-$C_{12}$ hydrocarbyl or $C_1$-$C_{12}$ halohydrocarbyl.

Embodiment 3: The composition of any of embodiments 1 or 2, wherein the monohydric phenol comprises 2,6-dimethylphenol, and the hydroxyaryl-terminated polysiloxane has the structure

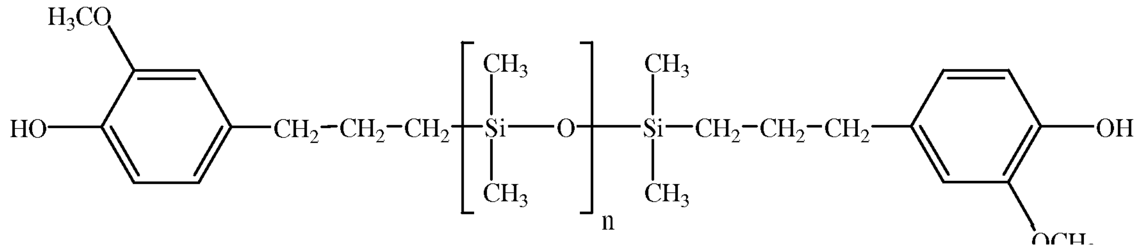

wherein n is, on average, 5 to 100.

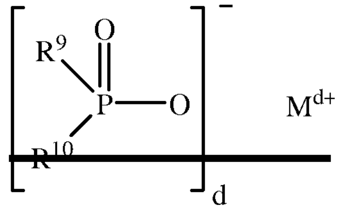

Embodiment 4: The composition of any of embodiments 1-3, wherein the poly(arylene ether)-polysiloxane block copolymer provides 1 to 5 weight percent polysiloxane to the composition.

Embodiment 5: A method of forming a composition, the method comprising: melt blending 35 to 45 weight percent of a polyamide comprising polyamide-6,6, 35 to 47 weight percent of a poly(arylene ether)-polysiloxane block copolymer, 2 to 10 weight percent of a metal dialkylphosphinate comprising aluminum tris(diethylphosphinate), and 5 to 15 weight percent glass fibers to form a composition; wherein the poly(arylene ether)-polysiloxane block copolymer comprises the product of a process comprising oxidatively copolymerizing of a monomer mixture comprising 90 to 99 parts by weight of a monohydric phenol and 1 to 10 parts by weight of a hydroxyaryl-terminated polysiloxane, based on the total weight of the monohydric phenol and the hydroxyaryl-terminated polysiloxane; wherein all weight percents are based on the total weight of the composition.

Embodiment 6: A composition prepared by the method of embodiment 5.

Embodiment 7: An article comprising the composition of any of embodiments 1- 4 and 6.

The invention is further illustrated by the following non-limiting examples.

PREPARATIVE EXAMPLE 1

This example illustrates the preparation of a poly(arylene ether)-polysiloxane block copolymer by oxidative polymerization of 95 weight percent monohydric phenol in the presence of 5 weight percent of a hydroxyaryl-diterminated polysiloxane.

The process is summarized in Table 1, where "Toluene source" refers to whether the toluene solvent is fresh ("Fresh" in Table 1) or recycled ("Recyc." in Table 1) from a poly(arylene ether) homopolymer synthesis; "DMBA level (%)" is the concentration of dimethyl-n-butylamine, expressed as a weight percent relative to the weight of toluene; "Solids (%)" is the weight of total 2,6-dimethylphenol and eugenol-capped polysiloxane, expressed as a weight percent relative to the sum of the weights of 2,6-dimethylphenol, eugenol-capped polysiloxane, and toluene; "Polysiloxane chain length" is the average number of dimethylsiloxane ($-Si(CH_3)_2O-$) units in the eugenol-capped polysiloxane; "Polysiloxane loading (%)" is the weight percent of eugenol-capped polysiloxane in the reaction mixture, based on the total weight of the eugenol-capped polysiloxane and the 2,6-dimethylphenol; "Initial 2,6-dimethylphenol (%)" is the weight percent of 2,6-dimethylphenol present in the reaction vessel at the initiation of polymerization (the introduction of oxygen to the reaction vessel), relative to the total weight of 2,6-dimethylphenol; "O:2,6-dimethylphenol mole ratio" is the mole ratio of atomic oxygen (provided as molecular oxygen) to 2,6-dimethylphenol maintained during the addition of 2,6-dimethylphenol; "Temp., initial charge (°C)" is the temperature, in degrees centigrade, of the reaction mixture when the initial charge of monomer is added to the reaction vessel, and when oxygen is first introduced to the reaction mixture; "Temp., addition (°C)" is the reaction temperature during further addition of 2,6-dimethylphenol; "Temp., build (°C)" is the temperature, expressed in degrees centigrade, during the build phase of the reaction; "Ramp time (min)" is the time, expressed in minutes, during which the temperature was ramped from the addition temperature to the build temperature; "Ramp slope (°C/min)" is the rate of change of temperature, expressed in degrees centigrade per minute, during the period in which the temperature was ramped from the addition temperature to the build temperature; "Reaction time (min)" is the total reaction time, expressed in minutes, elapsed between the moment of oxygen introduction and the moment of oxygen

cut-off. For all variations, controlled monomer addition time is 40 to 80 minutes from start of reaction (that is, the initiation of oxygen flow). Build time is measured from the end of controlled monomer addition to the end of reaction (that is, to the termination of oxygen flow); build time was about 80 to 160 minutes.

The following general synthetic procedure was used. The reactor and the 2,6-dimethylphenol addition tank were rinsed with warm toluene that was then discarded. The reaction was purged with nitrogen to achieve an oxygen concentration of less than 1%. The reactor was charged with initial toluene (fresh or recycled), and this toluene was stirred at 500 rotations per minute (rpm). The temperature of the initial toluene was adjusted to the "initial charge" temperature specified in Table 1 and maintained at that temperature during addition of the initial charge of 2,6-dimethylphenol from the addition tank to the reaction vessel. After the addition of the initial charge of 2,6-dimethylphenol was complete, the reaction vessel was charged with the eugenol-capped polydimethylsiloxane, the di-n-butylamine, the dimethyl-n-butylamine, the diamine, and the copper catalyst. Oxygen flow and further monomer addition were initiated, and the oxygen flow was regulated to maintain a headspace concentration less than 17%. During further monomer addition, cooling water supply temperature was adjusted to maintain the temperature specified as "Temp., addition (°C)" in Table 1. After monomer addition was complete, the monomer addition line was flushed with toluene and the reaction temperature was increased to the temperature specified as "Temp., build (°C)" in Table 1. This temperature adjustment was conducted over the time period specified as "Ramp time (min)", and at the rate specified as "Ramp slope (°C/min)" in Table 1. The reaction was continued until a pre-determined time point was reached. The pre-determined end point is the time at which target intrinsic viscosity and maximum siloxane incorporation are attained and is typically 80 to 160 minutes after 2,6-dimethylphenyl addition ends. Once the time point was reached, the oxygen flow was stopped. The reaction mixture was then heated to 60°C and pumped to a chelation tank containing aqueous chelant solution. The resulting mixture was stirred and held at 60°C for one hour. The light (organic) and heavy (aqueous) phases were separated by decantation, and the heavy phase was discarded. A small portion of the light phase was sampled and precipitated with isopropanol for analysis, and the remainder of the light phase was pumped to a precipitation tank and combined with methanol antisolvent (for which isopropanol antisolvent can be substituted) in a weight ratio of 3 parts antisolvent to 1 part light phase. The precipitate was filtered to form a wet cake, which was reslurried three times with the same antisolvent and dried under nitrogen until a toluene concentration less than 1 weight percent was obtained.

Properties of resulting products are summarized in Table 1. "Total volatiles (%)", which is weight percent of volatiles in the isolated product, was determined by measuring the percent weight loss accompanying drying for 1 hour at 110°C under vacuum; "Residual Cu (ppm)", which is the residual catalyst concentration expressed as parts per million by weight of elemental copper, was determined by atomic absorption spectroscopy; for properties as a function of reaction time, samples were removed from the reactor and precipitated (without prior chelation of catalyst metal) by addition of one volume of reaction mixture to three volumes of room temperature isopropanol to yield a precipitate that was filtered, washed with isopropanol, and dried prior to $^1$H NMR (to determine weight percent siloxane and siloxane incorporation efficiency) and intrinsic viscosity analyses.

Number average molecular weight and weight average molecular weight were determined by gel permeation chromatography as follows. The gel permeation chromatograph is calibrated using eight polystyrene standards, each of narrow molecular weight distribution and collectively spanning a molecular weight range of 3,000 to 1,000,000 grams/mole. The columns used were 1e3 and 1e5 angstrom PLgel columns with a 5 microliter 100 angstrom PLgel guard column. Chromatography was conducted at 25°C. The elution liquid was chloroform with 100 parts per million by weight di-n-butylamine. The elution flow was 1.2 milliliters per minute. The detector wavelength was 254 nanometers. A third degree polynomial function is fitted through the calibration points. Experimental samples are prepared by dissolving 0.27 grams isolated block copolymer solid in 45 milliliters toluene. A 50 microliter sample of the resulting solution is injected into the chromatograph. The values of number average molecular weight ($M_n$) and weight average molecular weight ($M_w$) are calculated from the measured signal using the polystyrene calibration line. The values are subsequently converted from polystyrene molecular weight to poly(2,6-dimethyl-1,4-phenylene ether) molecular weights using the equation $M(PPE) = 0.3122 \times M(PS)^{1.073}$, where M(PPE) is poly(2,6-dimethyl-1,4-phenylene ether) molecular weight and M(PS) is polystyrene molecular weight.

In Table 1, "Mol. Wt. <10K (%)" is the weight percent of the isolated reaction product having a molecular weight less than 10,000 atomic mass units, as determined by gel permeation chromatography; "Mol. Wt. >100K (%)" is the weight percent of the isolated reaction product having a molecular weight less than 10,000 atomic mass units, as determined by gel permeation chromatography; "IV, end of rxn. (dL/g)" is the intrinsic viscosity, expressed in deciliters per gram and measured by Ubbelohde viscometer at 25°C in chloroform, of dried powder isolated by precipitation from isopropanol; "IV, end of cheln. (dL/g)" is the intrinsic viscosity, expressed in deciliters per gram and measured by Ubbelohde viscometer at 25°C in chloroform, of the product present in the post-chelation organic phase which has been isolated by precipitation from isopropanol then dried; "$M_w$, end of rxn. (AMU)" is the weight average molecular weight, expressed in atomic mass units and measured by gel permeation chromatography, of the product present in the reaction mixture at the end of the polymerization reaction which has been isolated by precipitation from isopropanol then dried; "$M_n$, end of rxn. (AMU)" is the number average molecular weight, expressed in atomic mass units and measured by gel

permeation chromatography, of the product present in the reaction mixture at the end of the polymerization reaction which has been isolated by precipitation from isopropanol then dried; "$M_w/M_n$, end of rxn." is the ratio of weight average molecular weight to number average molecular weight for the product present in the reaction mixture at the end of the polymerization reaction which has been isolated by precipitation from isopropanol then dried; "$M_w$, end of cheln. (AMU)" is the weight average molecular weight, expressed in atomic mass units and measured by gel permeation chromatography, of the product present in the post-chelation organic phase which has been isolated by precipitation from isopropanol then dried; "$M_n$, end of cheln. (AMU)" is the number average molecular weight, expressed in atomic mass units and measured by gel permeation chromatography, of the product present in the post-chelation organic phase which has been isolated by precipitation from isopropanol then dried; "$M_w/M_n$, end of cheln." is the ratio of weight average molecular weight to number average molecular weight for the product present in the post-chelation organic phase which has been isolated by precipitation from isopropanol then dried.

In Table 1, "Weight % siloxane (%)" is the weight percent of dimethylsiloxane units in the isolated product, based on the total weight of 2,6-dimethyl-1,4-phenylene ether units and dimethylsiloxane units in the isolated product, as determined by $^1$H NMR using protons labeled ***a*** and ***b*** in the structure labeled "Formula (I)", below, and calculated as

$$Weight\,\%Siloxane_in_product = \frac{X}{X+Y} \times 100$$

where

$$X = \frac{Peak\,"b"\,Integral\,@\,0.6\,ppm \times Mn\,Siloxane\,Fluid}{proton\,per\,Siloxane\,Chain},$$

and

$$Y = \frac{Peak\,"a"\,Integral\,@\,6.47\,ppm \times MW\,2{,}6xylenol}{2}$$

where *"Mn Siloxane Fluid*" in the equation for X is the number average molecular weight of the dimethylsiloxane units in the hydroxyaryl-terminated polysiloxane, and *"MW* 2,6*xylenol*" in the equation for *Y* is the molecular weight of 2,6-dimethylphenol. Calling this metric "Weight % siloxane" is an oversimplification in that it neglects isolated product constituents other than the 2,6-dimethyl-1,4-phenylene ether units and dimethylsiloxane units. Nevertheless, it is a useful metric.

In Table 1, "Siloxane Incorporation Efficiency (%)" is the weight percent of dimethylsiloxane units in the isolated product compared to the weight percent of dimethylsiloxane units in the total monomer composition used in the reaction mixture (the precipitation from isopropanol removes unreacted (unincorporated) siloxane macromer), as determined by $^1$H NMR using protons labeled ***a*** and ***b*** in the structure labeled "Formula (I)", and calculated as

$$Siloxane_Incorporation_Efficiency_(\%) = \frac{Weight\%Siloxane_in_product}{\%Siloxane\,Loaded} \times 100$$

where the equation for *Weight%Siloxane_in_product* is given above, and

$$\%Siloxane\,Loaded = \frac{Weight\,of\,\,Siloxane\,Monomer\,Loaded}{Weight\,of\,\,Siloxane\,Monomer\,Loaded + Weight\,of\,\,2{,}6\,Monomer\,Loaded} \times 100$$

where *"Weight of Siloxane Monomer Loaded*" is the weight of hydroxyaryl-terminated polysiloxane used in the reaction mixture, and *"Weight of 2, 6 Monomer Loaded*" is the total weight of 2,6-dimethylphenol used in the reaction mixture. Calling this metric "Siloxane Incorporation Efficiency" is an oversimplification in that it neglects the possibility that small amounts of monomers and oligomers may be lost in the isolation process. For example, it is theoretically possible for the Siloxane Incorporation Efficiency to exceed 100% if all of the hydroxyaryl-terminated polysiloxane is incorporated into block copolymer, and some arylene ether oligomers are lost in the isolation procedure. Nevertheless, Siloxane Incorporation Efficiency is a useful metric.

In Table 1, "Tail (%)" refers to the percent of 2,6-dimethylphenol that are in an end group configuration compared to total 2,6-dimethylphenol residues and is determined by $^1$H NMR using the "tail" protons labeled ***e*** in the structure labeled "Formula (III)" below, and the protons labeled ***a*** in the structure labeled "Formula (I)" below, and calculated as

$$\%Tail = \frac{Z}{Z+Y} \times 100$$

where the equation for *Y* is above, and

$$Z = \frac{Peak\text{"}e\text{"}\ Integral\ @\ 7.09\,ppm \times MW\ of\ 2{,}6xylenol}{3}$$

In Table 2, "Biphenyl (%)" is the weight percent of 3,3',5,5'-tetramethyl-4,4'-biphenol residues, that is, residues having the structure

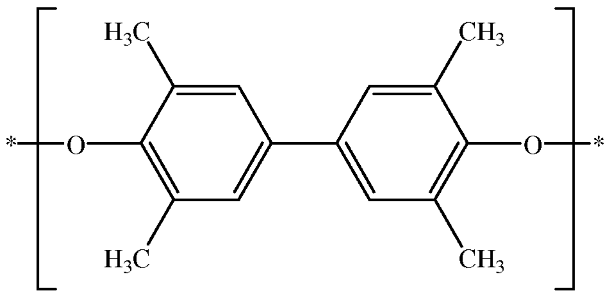

and is determined by $^1$H NMR using the "biphenyl" protons labeled ***d*** in the structure labeled "Formula (II)", below, and the protons labeled ***a*** in the structure labeled "Formula (I)", and calculated as

$$\%Biphenyl = \frac{W}{W+Y} \times 100$$

where the equation for *Y* is above, and

$$W = \frac{Peak\text{"}d\text{"}\ Integral\ @\ 7.35\,ppm \times MW\ biphenyl}{4}$$

wherein "*MW biphenyl*" is the molecular weight of the residue of 3,3',5,5'-tetramethyl-4,4'-biphenol shown above.

"OH (ppm)" is the parts per million by weight of all hydroxyl groups, based on the total weight of the isolated sample, as determined by $^{31}$P NMR after phosphorus derivatization of the hydroxyl groups of the isolated sample as described in K. P. Chan et al., "Facile Quantitative Analysis of Hydroxyl End Groups of Poly(2,6-dimethyl-1,4-phenylene oxide)s by 31P NMR Spectroscopy", Macromolecules, volume 27, pages 6371-6375 (1994).

Formula (I):

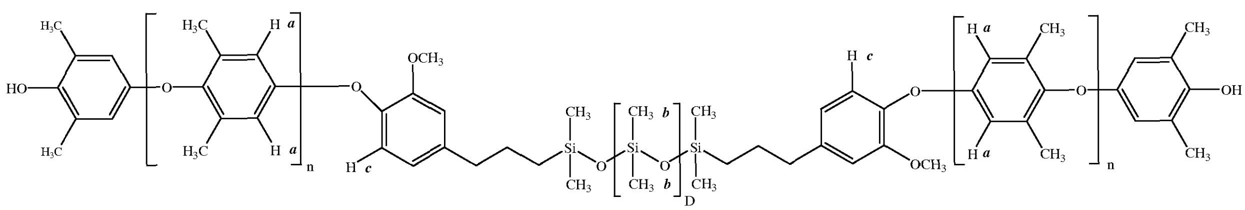

Formula (II):

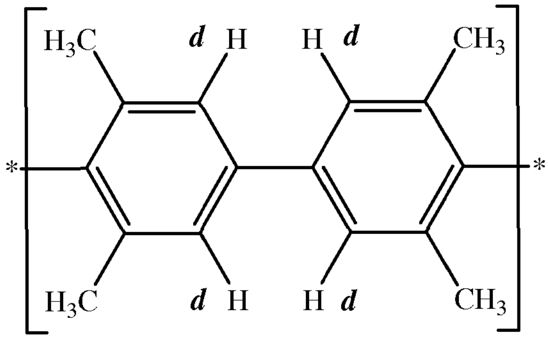

Formula (III):

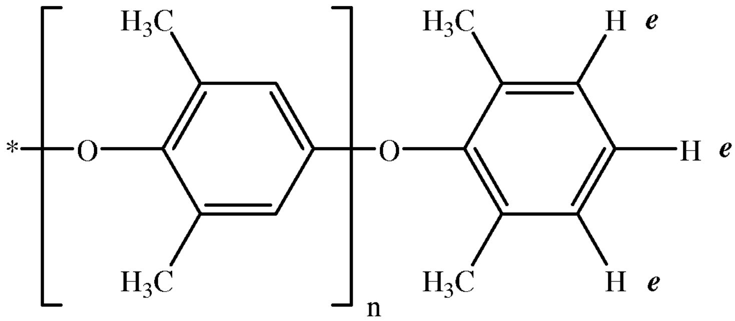

Table 1

| | P. Ex. 1 |
|---|---|
| REACTION CONDITIONS | |
| Toluene Source | Recyc. |
| DMBA level (%) | 2.4 |
| Solids (%) | 23 |
| Polysiloxane chain length | 45 |
| Polysiloxane loading (%) | 5 |
| Initial 2,6-DMP (%) | 7.9 |
| O:2,6-DMP mole ratio | 0.98 |
| Catalyst (%) | 0.75 |
| Temp., initial charge (°C) | 21 |
| Temp., addition (°C) | 38 |
| Temp., build (°C) | 49 |
| Ramp time (min) | 30 |
| Ramp slope (°C/min) | 0.37 |
| Reaction time (min) | 200 |
| FINAL PRODUCT PROPERTIES | |
| Mol. Wt. <10K (%) | 12 |
| Mol. Wt. >100K (%) | 12 |
| IV, end of rxn. (dL/g) | 0.40 |

(continued)

| FINAL PRODUCT PROPERTIES | |
|---|---|
| IV, end of cheln. (dL/g) | 0.36 |
| $M_w$, end of rxn. (AMU) | 58000 |
| $M_n$, end of rxn. (AMU) | 24000 |
| $M_w/M_n$, end of rxn. | 2.4 |
| $M_w$, end of cheln. (AMU) | 50000 |
| $M_n$, end of cheln. (AMU) | 19000 |
| $M_w/M_n$, end of cheln. | 2.6 |
| Weight % siloxane (%) | 4.77 |
| Silox. Incorp. Effic. (%) | 95 |
| Weight % Biphenyl (%) | 1.26 |
| Total OH (ppm) | 1532 |
| Total volatiles (%) | - |
| Residual Cu (ppm) | - |
| Wt. % siloxane, 80 min (%) | 0.17 |
| Wt. % siloxane, 110 min (%) | 3.67 |
| Wt. % siloxane, 200 min (%) | 4.64 |
| Silox. Incorp. Effic., 80 min (%) | 3.34 |
| Silox. Incorp. Effic., 110 min (%) | 73.33 |
| Silox. Incorp. Effic., 200 min (%) | 92.81 |
| IV, 80 min (dL/g) | 0.06 |
| IV, 110 min (dL/g) | 0.12 |
| IV, 200 min (dL/g) | 0.40 |

For characterization of the Preparative Example 1 composition as a function of molecular weight fraction, fractions from six gel permeation chromatography injections (36 mg of total material injected) were collected using a Gilson fraction collector. The effluent eluting between 12 and 25 minutes run time was divided into 60 test tubes which were later recombined to give 6 fractions with each contained approximately 16.67% of the total material (determined from area percent of the chromatogram). A small part (200μl) of the five fractions was analyzed by gel permeation chromatography to confirm the success of the fractionation. The remaining part was used for $^1$H NMR analysis. The portion used for NMR analysis was evaporated to dryness at 50°C under a nitrogen flow. One milliliter of deuterated chloroform (with tetramethylsilane as internal standard) was added and the samples were analyzed by $^1$H NMR. The results, presented in Table 4, show, first, that all fractions contain substantial dimethylsiloxane content. The fact that no "% tail" was detected in the highest molecular weight fraction indicates that this fraction is essentially free of poly(arylene ether) homopolymer; that is, it is essentially pure block copolymer. Similarly, the fact that the largest "% tail" was observed in the lowest molecular weight fraction means that the poly(arylene ether) is biased toward the lower molecular weight fractions.

Table 2

| Sample description | Siloxane weight (%) | Biphenyl weight (%) | Tail Weight (%) |
|---|---|---|---|
| Fraction 1 (83-100% of MW curve; highest MW fraction) | 4.39 | 0.56 | 0.00 |
| Fraction-02 (67-83% of MW curve) | 4.18 | 0.85 | 0.00 |

(continued)

| Sample description | Siloxane weight (%) | Biphenyl weight (%) | Tail Weight (%) |
|---|---|---|---|
| Fraction-03 (50-67% of MW curve) | 4.34 | 0.87 | 0.00 |
| Fraction-04 (33-50% of MW curve) | 4.71 | 1.16 | 0.09 |
| Fraction-05 (17-33% of MW curve) | 5.27 | 1.61 | 0.19 |
| Fraction-06 (0-17% of MW curve; lowest Mw fraction) | 6.90 | 3.40 | 1.00 |

PREPARATIVE EXAMPLE 2

This example illustrates the preparation of a poly(arylene ether)-polysiloxane block copolymer by oxidative polymerization of 80 weight percent monohydric phenol in the presence of 20 weight percent of a hydroxyaryl-diterminated polysiloxane. The general procedure of Preparative Example 1 was followed, except that the monomer mixture contained 80 weight percent monohydric phenol in the presence of 20 weight percent of a hydroxyaryl-diterminated polysiloxane. Reaction conditions and product properties are summarized in Table 3.

Table 3

| | P. Ex. 2 |
|---|---|
| REACTION CONDITIONS | |
| Toluene Source | Fresh |
| DMBA level (%) | 2 |
| Solids (%) | 23 |
| Polysiloxane chain length | 45 |
| Polysiloxane loading (%) | 20 |
| Initial 2,6-DMP (%) | 7.9 |
| O:2,6-DMP mole ratio | 0.98 |
| Catalyst (%) | 1.5 |
| Temp., initial charge (°C) | 30 |
| Temp., addition (°C) | 30 |
| Temp., build (°C) | 49 |
| Ramp time (min) | 10 |
| Ramp slope (°C/min) | 1.9 |
| Reaction time (min) | 200 |
| FINAL PRODUCT PROPERTIES | |
| Mol. Wt. <10K (%) | -- |
| Mol. Wt. >100K (%) | -- |
| IV, end of rxn. (dL/g) | -- |
| IV, end of cheln. (dL/g) | 0.30 |
| $M_w$, end of rxn. (AMU) | -- |
| $M_n$, end of rxn. (AMU) | -- |
| $M_w/M_n$, end of rxn. | -- |
| $M_w$, end of cheln. (AMU) | 32000 |

(continued)

| FINAL PRODUCT PROPERTIES | |
|---|---|
| $M_n$, end of cheln. (AMU) | 14000 |
| $M_w/M_n$, end of cheln. | 2.3 |
| Weight % siloxane (%) | 14 |
| Siloxane Incorporation Efficiency (%) | 70 |

PREPARATIVE EXAMPLES 3-4

This example illustrates the preparation of poly(arylene ether)-polysiloxane multiblock copolymers by the reaction of a hydroxy-diterminated poly(arylene ether), a hydroxyaryl-diterminated polysiloxane, and an aromatic diacid chloride, followed by capping of terminal hydroxy groups with benzoyl chloride. This is a presently preferred method for synthesizing poly(arylene ether)-polysiloxane block copolymers having high polysiloxane content. Both examples used an acid chloride to hydroxy group molar ratio of 0.99:1, a 25°C reaction temperature, a 3:1 molar ratio of benzoyl chloride capping agent to residual hydroxy groups on the multiblock copolymer, a 20 minute benzoyl chloride addition time, and a 2 hour benzoyl chloride reaction time following complete addition of benzoyl chloride.

A detailed polymerization and isolation procedure is as follows. Make a 20% weight/volume solution of the purified acid chloride in dichloromethane and transfer it to an addition funnel. Under anhydrous condition, make a 20% weight/volume solution of the hydroxy-diterminated poly(arylene ether) in dichloromethane and transfer it to a two-neck reaction flask kept at room temperature. With efficient stirring in the reaction flask, gradually pour a 20% weight/volume solution of the hydroxyaryl-diterminated polysiloxane in dichloromethane into the reaction flask. Once a homogenous solution is obtained, add a 20% weight/volume solution of triethylamine in dichloromethane to the homogenous reaction mass while continuing to stir the reaction flask contents. Begin drop-wise addition of the terephthaloyl chloride solution and maintain an addition rate such that the entire solution is added into the reaction flask within 60 minutes. After addition of the terephthaloyl chloride solution has been completed, continue the reaction for an additional three hours. After a total reaction time of 4 hours, terminate the stirring of the reaction mixture and slowly pour the reaction mixture volume into six volumes of methanol with vigorous stirring, causing precipitation of the block copolymer product. Continue stirring for at least one hour to facilitate removal of trapped dichloromethane and dissolution of the triethylammonium hydrochloride salt byproduct in methanol. Slowly decant the methanol, isolate the product copolymer (e.g., by filtration), and dry the product copolymer in vacuum at 80°C.

Reagent amounts and properties of the resulting multiblock copolymers are summarized in Table 4. For the reagents in Table 4, "PPE-2OH, 0.09" is a copolymer of 2,6-xylenol and 2,2-bis(4-hydroxy-3,5-dimethylphenyl)propane (CAS Reg. No. 1012321-47-9), having an average of about 1.9 terminal hydroxy groups per molecule and an intrinsic viscosity of 0.09 deciliter per gram in chloroform at 25°C, obtained as MX90-100-0 from SABIC Innovative Plastics; "Eugenol-D10" is a eugenol-diterminated polydimethylsiloxane (CAS Reg. No. 156065-00-8), having an average of about 10 polydimethylsiloxane units per molecule, obtained as Y-17126 from Momentive Performance Materials. "PPE-2OH, 0.09 (Wt %)" is the weight percent of the "PPE-2OH, 0.09" reagent, based on the total weight of the "PPE-2OH, 0.09" reagent and the "Eugenol-D10" reagent. "Eugenol-D10 (Wt %)" is the weight percent of the "Eugenol-D10" reagent based on the total weight of the "PPE-2OH, 0.09" reagent and the "Eugenol-D10" reagent.

For the properties in Table 4, "PPE Incorporation (Wt %)" is the weight percent of poly(arylene ether) blocks in the product multiblock copolymer, based on the total weight of poly(arylene ether) blocks and polysiloxane blocks, as determined by proton nuclear magnetic resonance spectroscopy ($^1$H NMR); "Siloxane Incorporation (Wt %)" is the weight percent of polysiloxane blocks in the product multiblock copolymer, based on the total weight of poly(arylene ether) blocks and polysiloxane blocks, as determined by $^1$H NMR; "$M_n$ (amu)" is the number average molecular weight of the product multiblock copolymer, as determined by gel permeation chromatography with polystyrene standards; "$M_w$ (amu)" is the weight average molecular weight of the product multiblock copolymer, as determined by gel permeation chromatography with polystyrene standards; "$M_w/M_n$" is the polydispersity, or ratio of weight average molecular weight to number average molecular weight; "Residual - OH ends (ppm)" is the content of free (terminal) hydroxy groups, as determined by $^{31}$P NMR after phosphorus derivatization of the hydroxyl groups of the isolated sample as described in K. P. Chan et al., "Facile Quantitative Analysis of Hydroxyl End Groups of Poly(2,6-dimethyl-1,4-phenylene oxide)s by 31P NMR Spectroscopy", Macromolecules, volume 27, pages 6371-6375 (1994); "DSC Tg (°C)" is the glass transition temperature of the poly(arylene ether) blocks, as determined by differential scanning calorimetry; "TGA Decomposition Peak (°C)" is the peak temperature in a plot of the derivative of weight versus temperature as determined by derivative thermogravimetric analysis (dTGA); "MVR @ 280 °C / 2.16 kg" is the melt volume-flow rate, expressed in units of milliliters per 10 minutes (mL/10 min), measured according to ASTM D1238-04c, using a temperature of 280°C and a load of 2.16

kilograms; "Tensile Modulus (MPa)" is the tensile modulus, expressed in units of megapascals (MPa), measured at 23°C according to ASTM D638-08; "Tensile Stress @ Break (MPa)", is the tensile stress at break, expressed in units of megapascals, measured at 23°C according to ASTM D638-08; "Tensile Elongation @ Break (%)" is the tensile elongation at break, expressed in percent, measured at 23°C according to ASTM D638-08; "Hardness (Shore D)", is the Shore D durometer hardness, expressed without units, measured at 23°C according to ASTM D2240-05; "NII @ 23°C (kJ/$m^2$)" and "NII @ 0°C (kJ/$m^2$)" are notched Izod impact strength values at 23°C and 0°C, respectively, expressed in units of kilojoules per $meter^2$, measured according to ISO 180/A1; "MAI Total Energy @ 23°C (J)" and "MAI Total Energy @ 0°C (J)" are multi-axial impact strengths, expressed in units of joules (J), measured at 23°C and 0°C, respectively, on 3.2 millimeter thick, 102 millimeter diameter discs according to ASTM D3763-08, with a "(D)" following the reported value denoting ductile failure, and a "(B)" following the reported value denoting brittle failure; "Tension Set at 48 hours (%)" was measured according to ASTM D412-06ae2; "Trouser Tear Strength, Type T (kN/m)" was measured according to ASTM D624-00(2007); "Dielectric Strength (kV/mm)" was measured according to ASTM D149-09 at a frequency of 500 volts/sec; Dielectric constants ("Dk") and dissipation factors ("Df") were determined according to ASTM D150-98(2004); Volume resistivity, expressed in units of ohm-centimeters, and surface resistivity, expressed in units of ohms, were measured at 23°C according to ASTM D275-07.

Also in Table 4, "UL 94 Rating, 2 mm" and "UL 94 Rating, 1.6 mm" are Vertical Burn Test ratings measured at sample thicknesses of 2 millimeters and 1.6 millimeters, respectively, according to Underwriter's Laboratory Bulletin 94, "Tests for Flammability of Plastic Materials, UL 94", Vertical Burning Flame Test. In this procedure, a test bar with dimensions 125×12.59 millimeters and the specified thickness is mounted vertically. A 1.9 centimeter (three-quarter inch) flame is applied to the end of the test bar for 10 seconds and removed. The time to extinguish is measured for ten samples, and the standard deviation calculated (first burn time; "UL 94 FOT T1, 2 mm (sec)" and "UL 94 FOT T1, 1.6 mm (sec)" in Table 4). The flame is reapplied for another 10 seconds and removed. The time to extinguish is measured (second burn time; "UL 94 FOT T2, 2 mm (sec)" and "UL 94 FOT T2, 1.6 mm (sec)" in Table 4). For a V-0 rating, no individual burn times from the first or second flame application may exceed 10 seconds; the total of the burn times for any five specimens may not exceed 50 seconds; and drip particles that ignite a piece of cotton gauze situated below the specimen are not allowed; burn-to-clamps is not allowed. For a V-1 rating, no individual burn times from the first or second flame application may exceed 30 seconds; the total of the burn times for any five specimens may not exceed 250 seconds; and drip particles that ignite a piece of cotton gauze situated below the specimen are not allowed. For a V-2 rating, no individual burn times from the first or second flame application may exceed 30 seconds; the total of the burn times for any five specimens may not exceed 250 seconds; and drip particles that ignite a piece of cotton gauze situated below the specimen are allowed, but burn-to-clamps is not allowed. "UL 94 Drip, 2 mm" and "UL 94 Drip, 1.6 mm" are visual observations of dripping measured during vertical burn testing at sample thicknesses of 2 millimeters and 1.6 millimeters, respectively, with a value of "ND" corresponding to no drips observed, and a value of "D" corresponding to at least one drip observed. The smoke density parameters "DS4 (min)" and "DSMax (min)" were measured according to ASTM E662-09.

Table 4

| | P. Ex. 3 | P. Ex. 4 |
|---|---|---|
| PPE-2OH, 0.09 (Wt %) | 40 | 30 |
| Eugenol-D10 (Wt %) | 60 | 70 |
| PPE Incorporation (Wt %) | 42.5 | 32.62 |
| Siloxane Incorporation (Wt %) | 57.5 | 67.38 |
| $M_n$ (amu) | 37000 | 39000 |
| $M_w$ (amu) | 72000 | 82000 |
| $M_w/M_n$ | 1.945 | 1.9 |
| Residual -OH ends (ppm) | 53.87 | 61.46 |
| DSC $T_g$ (°C) | 147.83 | 144.6 |
| TGA Decomposition Peak (°C) | 472.6 | 465.9 |
| MVR @ 280 °C / 2.16 kg (mL/10 min) | 6.62 | 38.8 |
| Tensile Modulus (MPa) | 313.41 | 118.02 |
| Tensile Stress @ Break (MPa) | 12.07 | 7.87 |

(continued)

| | P. Ex. 3 | P. Ex. 4 |
|---|---|---|
| Tensile Elongation @ Break (%) | 66.27 | 191.08 |
| Hardness (Shore D) | 58 | 40 |
| NII @ 0°C (kJ/$m^2$) | 22.36 | 36.67 |
| NII @ -30°C (kJ/$m^2$) | 12.788 | 24.088 |
| MAI Total Energy @ 0°C (J) | 67.29 (D) | 76.19 (D) |
| MAI Total Energy @ -30°C (J) | 57.88 (D) | 58.7 (D) |
| Tension Set at 48 hours (%) | 33.34 | 20.08 |
| Trouser Tear Strength, Type T (kN/m) | 34.95 | 17.8 |
| VST (°C) | 85 | 55 |
| Dielectric Strength (kV/mm) | 27.89 | 26.65 |
| Dk (100 MHz) | 2.784 | 2.782 |
| Dk (500 MHz) | 2.729 | 2.71 |
| Dk (1000 MHz) | 2.596 | 2.543 |
| Df (100 MHz) | 0.0078 | 0.0074 |
| Df (500 MHz) | 0.0057 | 0.0051 |
| Df (1000 MHz) | 0.0048 | 0.0037 |
| Volume Resistivity (Ohm-cm) | 1.25E+13 | 2.12E+12 |
| Surface Resistivity (Ohm) | 1.57E+15 | 4.09E+14 |
| UL 94 Rating (2mm) | V0 | V0 |
| UL 94 FOT T1 at 2 mm (sec) | 1.6(0.68) | 3.23(1.07) |
| UL 94 FOT T2 at 2 mm (sec) | 4.2(1.7) | 1.74(1.32) |
| UL 94 Drip at 2 mm | 10/10 ND | 10/10 D |
| UL 94 Rating at 1.6 mm | V0 | V2 |
| UL 94 FOT T1 at 1.6 mm (sec) | 1.58(0.26) | 3.69(1.55) |
| UL 94 FOT T2 at 1.6 mm (sec) | 4.19(1.37) | 0.71(.97) |
| UL 94 Drip at 1.6 mm | 10/10 ND | 10/10 D |
| UL 94 Rating at 1 mm | V2 | V2 |
| UL 94 FOT T1 at 1 mm (sec) | 3.98(2.86) | 2.92(0.98) |
| UL 94 FOT T2 at 1 mm (sec) | 2.85(3.23) | 3.3(3.02) |
| UL 94 Drip at 1 mm | 10/10 D | 10/10 D |
| UL 94 Rating at 0.8 mm | V2 | V2 |
| UL 94 FOT T1 at 0.8 mm (sec) | 3.12(1.45) | 5.52(2.96) |
| UL 94 FOT T2 at 0.8 mm (sec) | 0.94(1.24) | 2.18(2.04) |
| UL 94 Drip at 0.8 mm | 9/10 D | 10/10 D |
| Smoke DS4 (min) | 89.67 | 36.67 |
| Smoke DSMax (min) | 229 | 106 |

EXAMPLES 1-3, COMPARATIVE EXAMPLES 1-5

These experiments illustrate the effects of poly(arylene ether) type and metal dialkylphosphinate amount.

Table 5 summarizes the components used in the working examples.

Table 5

| Component | Description |
|---|---|
| PA66 | Polyamide-6,6, CAS Reg. No. 32131-17-2, having a weight average molecular weight of about 68,000-75,000 atomic mass units (g/mol), in pellet form; obtained as VYDYNE 21Z from Solutia Inc. |
| PPE | Poly(2,6-dimethyl-1,4-phenylene)ether having an intrinsic viscosity of 0.46 deciliter per gram, measured at 25°C in chloroform; obtained as PPO 646 from Sabic Innovative Plastics, US LLC |
| PPE-Si5% | Poly(arylene ether)-polysiloxane block copolymer with 5 weight percent polysiloxane content and an intrinsic viscosity of 0.45 deciliter/gram as measured at 25°C in chloroform; prepared as described in Preparative Example 1 |
| PPE-Si20% | Poly(arylene ether)-polysiloxane block copolymer with 20 weight percent polysiloxane content and an intrinsic viscosity of 0.44 deciliter/gram as measured at 25°C in chloroform; prepared as described in Preparative Example 2 |
| PPE-Si5%/CA (98/2) | A pre-compounded blend of 98 weight percent PPE-Si5% and 2 weight percent citric acid |
| PPE-Si20%/CA (98/2) | A pre-compounded blend of 98 weight percent PPE-Si20% and 2 weight percent citric acid |
| Silicone fluid | Amino-functional polysiloxane; obtained as SF 1706 from Momentive Performance Materials |
| Citric acid | Citric acid, obtained from International Chemical Corporation |
| Antioxidant | Hindered phenolic antioxidant, octadecyl 3,5-di-tert-butyl-4-hydroxyhydrocynnamate (CAS Reg. No. 2082-79-3); obtained as IRGANOX 1076 from Great Lakes Chemical Corporation |
| KI solution | Potassium iodide 50% solution in water; obtained from Ajay North America Incorporated |
| CuI | Cuprous iodide; obtained from Ajay North America Incorporated |
| DEPAL | Aluminum tris(diethyl phosphinate) (CAS Reg. No. 225789-38-8), obtained from Clariant |
| Glass fibers | Glass fibers surface treated for polyamide, having a diameter of about 10 micrometers and an initial length of about 3 millimeters; obtained as CHOPVANTAGE 3540 from PPG Industries |
| TSAN | A polytetrafluoroethylene encapsulated in styrene-acrylonitrile copolymer. |

Eight poly(arylene ether)-polyamide compositions were prepared using the components and amounts listed in Table 6, wherein all component amounts are in parts by weight. In these compositions, the metal dialkylphosphinate amount is varied from 0 to 6 weight percent, and the poly(arylene ether) type is either a poly(arylene ether) homopolymer or a poly(arylene ether)-polysiloxane block copolymer with 5 weight percent polysiloxane content. The blend formulations were prepared by dry blending the poly(arylene ether) or poly(arylene ether)-polysiloxane block copolymer, citric acid, stabilizers, and flame retardant. This mixture was fed into the extruder in the upstream or throat location. The polyamide-6,6 was fed using a separate feeder, but also added in the throat location. The glass fibers were fed using another separate feeder, but these fibers were added at a downstream location. The extruder used was a 30-millimeter Werner-Pfleiderer twin-screw extruder. The extruder was set with barrel temperatures of 290-300°C and a die temperature of 300°C, with the screw rotating at 300 rotations per minute (rpm), and with a throughput rate of about 20 kilograms per hour. Component amounts are expressed in parts by weight. The compositions were injection molded on an 85 ton Van Dorn injection molding machine. Prior to molding the pellets were dried at 110°C (230°F) for 4 hours. The injection molding conditions were as follows. The injection mold was set to a temperature of 90°C (194°F) and the heating zones of the injection molding machine were all set at 300°C (572°F).

Properties of the compositions are summarized in Table 6. Flexural modulus and flexural strength, each expressed in units of megapascals (MPa), were measured at 23°C according to ASTM D790-07e1. Heat deflection temperature, expressed in units of degrees centigrade, was measured under loads of 1.8 and 0.45 megapascals according to ASTM D648-07. Notched and unnotched Izod impact strengths, each expressed in units of kilojoules per meter$^2$, were

measured at 23°C according to ISO 180. Tensile modulus, expressed in units of megapascals, tensile strength at yield, expressed in megapascals, and tensile elongation at break, expressed in units of percent, were measured at 23°C according to ASTM D638-08. Melt volume flow rate, expressed in units of milliliters per 10 minutes, was measured at 280°C and 5 kilograms according to ASTM 1238-04c. Melt viscosities, expressed in units of pascal-seconds (Pa-s), were measured at 280°C and shear rates of 1,000 $second^{-1}$, 1,500 $second^{-1}$, 3,000 $second^{-1}$, and 5,000 $second^{-1}$ according to ASTM D3835-08. Compared to blends with poly(arylene ether), blends with poly(arylene ether)-polysiloxane block copolymer exhibit improved ductility as objectively manifested by higher notched Izod impact strengths (4 out of 4 comparisons) and higher tensile elongations at break (3 out of 4 comparisons). Compared to blends with poly(arylene ether), blends with poly(arylene ether)-polysiloxane block copolymer exhibited lower melt viscosity (15 out of 16 comparisons).

Flammability testing was conducted according to Underwriter's Laboratory Bulletin 94, "Tests for Flammability of Plastic Materials, UL 94", Vertical Burning Flame Test. Flame bars had a length of 125 millimeters, a width of 12.5 millimeters, and a thickness of 2.0 millimeters. The flame bar is mounted vertically and a 1.9 centimeter (three-quarter inch) flame is applied to the end of the test bar for 10 seconds and removed. In the present tests, he time for the sample to self-extinguish (first burn time) is measured for 50 samples, and the standard deviation calculated. The number of samples that burned for longer than 10 seconds is given in Table 6. The flame is reapplied for another 10 seconds and removed. The time for the sample to self-extinguish (second burn time) is measured and the standard deviation calculated. For the most desirable rating of V-0, no individual burn times from the first or second flame application may exceed 10 seconds; the total of the burn times for any five specimens may not exceed 50 seconds; and drip particles that ignite a piece of cotton gauze situated below the specimen are not allowed; burn-to-clamps is not allowed. For a V-1 rating, no individual burn times from the first or second flame application may exceed 30 seconds; the total of the burn times for any five specimens may not exceed 250 seconds; and drip particles that ignite a piece of cotton gauze situated below the specimen are not allowed. For a V-2 rating, no individual burn times from the first or second flame application may exceed 30 seconds; the total of the burn times for any five specimens may not exceed 250 seconds; and drip particles that ignite a piece of cotton gauze situated below the specimen are allowed, but burn-to-clamps is not allowed. A composition that does not meet the V-2 criteria is considered to have failed. UL 94 Vertical Burn Ratings for each composition are given in Table 6. The results show that at a given level of metal dialkylphosphinate, the samples with poly(arylene ether)-polysiloxane block copolymer exhibit better flame retardancy that the samples with poly(arylene ether). Among the samples with poly(arylene ether)-polysiloxane block copolymer, the sample without metal dialkylphosphinate (Comparative Example 2) failed the vertical burn test, but addition of only 2 parts by weight of metal dialkylphosphinate was sufficient to achieve the top rating of V-0 (Example 1).

To summarize, compared to blends with poly(arylene ether), blends with poly(arylene ether)-polysiloxane block copolymer and metal dialkylphosphinate exhibit improved flame retardancy and improved mechanical properties. This would not have been possible by manipulating metal dialkylphosphinate concentration alone, because increases in flame retardant concentration are typically accompanied by degradation of mechanical properties.

The substitution of poly(arylene ether)-polysiloxane block copolymer for poly(arylene ether) also affects the morphology of the resulting blends. Electron micrographs corresponding to Comparative Example 1, Comparative Example 2, Comparative Example 5, and Example 3 are presented as Figures 1-4. Prior to microscopic analysis, exposed sample faces were "etched" for fifteen seconds in toluene to dissolve the dispersed poly(arylene ether) phase, then sputter-coated with a thin gold layer. Thus, the dispersed poly(arylene ether) phase appears as voids in the electron micrographs. For Comparative Examples 1 and 2, with no metal dialkylphosphinate, the Figure 1 / Comparative Example 1 blend with poly(arylene ether) exhibits dispersed particles with a smaller mean projected area (0.33 $micrometer^2$) than the Figure 2 / Comparative Example 2 blend with poly(arylene ether)-polysiloxane block copolymer (0.55 $micrometer^2$). Surprisingly, the trend is reversed for metal dialkylphosphinate-containing Comparative Example 5 and Example 3. For those samples, the Figure 3 / Comparative Example 5 blend with poly(arylene ether) exhibits dispersed particles with a larger mean projected area (1.65 $micrometer^2$) than the Figure 4 / Example 3 blend with poly(arylene ether)-polysiloxane block copolymer (1.07 $micrometer^2$).

Table 6

| | C. Ex. 1 | C. Ex. 2 | C. Ex. 3 | Ex. 1 |
|---|---|---|---|---|
| COMPOSITIONS | | | | |
| PPE | 42 | 0 | 42 | 0 |
| PPE-Si5% | 0 | 42 | 0 | 42 |
| Citric acid | 0.6 | 0.6 | 0.6 | 0.6 |
| Antioxidant | 0.3 | 0.3 | 0.3 | 0.3 |

(continued)

| | C. Ex. 1 | C. Ex. 2 | C. Ex. 3 | Ex. 1 |
|---|---|---|---|---|
| COMPOSITIONS | | | | |
| KI solution | 0.3 | 0.3 | 0.3 | 0.3 |
| CuI | 0.05 | 0.05 | 0.05 | 0.05 |
| DEPAL | 0 | 0 | 2 | 2 |
| PA66 | 47 | 47 | 45 | 45 |
| Glass fibers | 10 | 10 | 10 | 10 |
| PROPERTIES | | | | |
| Flexural modulus (MPa) | 3649 | 3743 | 3836 | 3876 |
| Flexural strength (MPa) | 157.8 | 158.9 | 148.2 | 157.5 |
| Heat deflection temperature, 1.8 MPa (°C) | 205.4 | 201.5 | 205.1 | 193.9 |
| Heat deflection temperature, 0.45 MPa (°C) | 240.4 | 241.6 | 238.0 | 239.7 |
| Notched Izod ($kJ/m^2$) | 5.5 | 6.6 | 4.9 | 6.0 |
| Unnotched Izod ($kJ/m^2$) | 55.6 | 54.2 | 42.6 | 47.9 |
| Tensile modulus (MPa) | 4916 | 4915 | 5025 | 5038 |
| Tensile strength at yield (MPa) | 113.8 | 111.6 | 110.1 | 109.0 |
| Tensile elongation at break (%) | 4.7 | 4.5 | 3.5 | 3.7 |
| Melt volume flow rate, 280°C, 5 kg (mL/10 min) | 13.2 | 14.3 | 13.8 | 16.5 |
| Melt viscosity, 280°C, 1000 $sec^{-1}$ (Pa-s) | 313.6 | 316.2 | 313.7 | 276.7 |
| Melt viscosity, 280°C, 1500 $sec^{-1}$ (Pa-s) | 258.4 | 258.2 | 266.8 | 231.0 |
| Melt viscosity, 280°C, 3000 $sec^{-1}$ (Pa-s) | 181.7 | 177.1 | 223.7 | 165.4 |
| Melt viscosity, 280°C, 5000 $sec^{-1}$ (Pa-s) | 137.8 | 130.8 | 213.2 | 126.7 |
| No. flame bars out of 50 burning > 10 sec | 50 | 50 | 50 | 4 |
| UL 94 Vertical Burn Test Rating | failed | failed | failed | V-0 |
| | C. Ex. 4 | Ex. 2 | C. Ex. 5 | Ex. 3 |
| COMPOSITIONS | | | | |
| PPE | 42 | 0 | 42 | 0 |
| PPE-Si5% | 0 | 42 | 0 | 42 |
| Citric acid | 0.6 | 0.6 | 0.6 | 0.6 |
| Antioxidant | 0.3 | 0.3 | 0.3 | 0.3 |
| KI solution | 0.3 | 0.3 | 0.3 | 0.3 |
| CuI | 0.05 | 0.05 | 0.05 | 0.05 |
| DEPAL | 4 | 4 | 6 | 6 |
| PA66 | 43 | 43 | 41 | 41 |
| Glass fibers | 10 | 10 | 10 | 10 |
| PROPERTIES | | | | |
| Flexural modulus (MPa) | 4071 | 3828 | 4086 | 3957 |
| Flexural strength (MPa) | 135.7 | 148.5 | 123.6 | 142.1 |
| Heat deflection temperature, 1.8 MPa (°C) | 203.3 | 194.5 | 205.5 | 195.7 |

(continued)

| PROPERTIES | | | | |
|---|---|---|---|---|
| Heat deflection temperature, 0.45 MPa (°C) | 238.2 | 241.0 | 237.2 | 233.6 |
| Notched Izod (kJ/m$^2$) | 4.6 | 6.2 | 5.2 | 5.8 |
| Unnotched Izod (kJ/m$^2$) | 38.7 | 31.0 | 29.7 | 27.7 |
| Tensile modulus (MPa) | 5266 | 4970 | 5216 | 4910 |
| Tensile strength at yield (MPa) | 102.9 | 102.3 | 99.5 | 99.6 |
| Tensile elongation at break (%) | 3.0 | 3.8 | 2.8 | 3.5 |
| Melt volume flow rate, 280°C, 5 kg (mL/10 min) | 9.6 | 8.4 | 7.6 | 5.2 |
| Melt viscosity, 280°C, 1000 sec$^{-1}$ (Pa-s) | 375.2 | 311.5 | 390.8 | 373.9 |
| Melt viscosity, 280°C, 1500 sec$^{-1}$ (Pa-s) | 326.5 | 268.3 | 338.7 | 312.5 |
| Melt viscosity, 280°C, 3000 sec$^{-1}$ (Pa-s) | 258.1 | 209.3 | 266.9 | 242.6 |
| Melt viscosity, 280°C, 5000 sec$^{-1}$ (Pa-s) | 217.4 | 175.3 | 225.1 | 210.2 |
| No. flame bars out of 50 burning > 10 sec | 35 | 2 | 26 | 0 |
| UL 94 Vertical Burn Test Rating | failed | V-0 | V-1 | V-0 |

PREPARATIVE EXAMPLES 5 AND 6, COMPARATIVE EXAMPLES 6 AND 7

These comparative examples illustrate incorporation of polysiloxane content into a poly(arylene ether)-polyamide composition via pre-compounding of poly(arylene ether), amino-functionalized polysiloxane, and citric acid. While not wishing to be bound by any particular theory of operation, the inventors speculate that the pre-compounding of poly(arylene ether), amino-functionalized polysiloxane, and citric acid forms polysiloxane grafts on the poly(arylene ether) (i.e., it forms a poly(arylene ether)-graft-polysiloxane copolymer).

Compositions are summarized in Table 7. Preparative Examples 5 and 6 were analyzed by $^1$H NMR to determine the weight percent silicone fluid that was actually incorporated, or reacted into the functionalized poly(arylene ether). To do this, the as-compounded sample was analyzed by $^1$H NMR in deuterated chloroform to yield the values of "Incorporated Siloxane (wt%)" in Table 7. Separately, an as-compounded sample was dissolved in chloroform, precipitated with a mixture of 21 volume percent acetone and 79 volume percent methanol, and dissolved in deuterated chloroform for $^1$H NMR analysis, yielding the values of "Bound Siloxane (wt%)" in Table 7. Comparing the 7 weight percent nominal siloxane content to the "Incorporated Siloxane (wt%)" values in Table 7 indicates that a significant fraction of the siloxane fluid was lost during compounding (possibly through the extruder vacuum vents). Comparing the "Incorporated Siloxane (wt%)" values to the "Bound Siloxane (wt%)" indicates that less than half of the incorporated siloxane was chemically bound to the poly(arylene ether).

Table 7 also summarizes the mechanical properties of Comparative Examples 6 and 7 incorporating, respectively, Preparative Examples 4 and 5. The properties of Comparative Examples 6 and 7 can be compared with those of Example 3 in Table 6. Examples 3 exhibits better notched Izod impact strength and better tensile elongation at break when compared to Comparative Examples 6 and 7. This indicates that it is preferable to have the silicone incorporated into the backbone of the poly(arylene ether) rather than as grafts.

Table 7 also summarizes the flame retardancy properties of Comparative Examples 6 and 7. These properties are markedly inferior to those of Example 3, which achieved a V-0 rating and had zero flame bars out of 50 burning for longer than 10 seconds.

Micrographs showing the morphology of Comparative Examples 6 and 7 are presented as Figures 5 and 6, respectively. The Figure 5 / Comparative Example 6 image exhibits a particle mean projected area of 2.45 micometers$^2$, and the Figure 6 / Comparative Example 7 image exhibits a particle mean projected area of 5.36 micometers$^2$. The greater citric acid concentration of Comparative Example 6 relative to Comparative Example 7 was associated with smaller particle size (i.e., better compatibilization of polymide and poly(arylene ether). The particle size values for Comparative Examples 6 and 7 are substantially greater than that of Figure 4 / Example 3 (1.07 micrometer$^2$).

Table. 7

| | P.Ex.5 | P. Ex. 6 | C. Ex. 6 | C. Ex. 7 |
|---|---|---|---|---|
| PPE | 91 | 92.4 | 0 | 0 |
| Prep. Ex. 4 | -- | -- | 42 | 0 |
| Prep. Ex. 5 | -- | -- | 0 | 42 |
| Citric acid | 2 | 0.6 | 0 | 0 |
| Antioxidant | 0 | 0 | 0.3 | 0.3 |
| KI solution | 0 | 0 | 0.3 | 0.3 |
| CuI | 0 | 0 | 0.05 | 0.05 |
| DEPAL | 0 | 0 | 6 | 6 |
| Silicone fluid | 7 | 7 | 0 | 0 |
| PA66 | 0 | 0 | 41 | 41 |
| Glass fibers | 0 | 0 | 10 | 10 |
| PROPERTIES | | | | |
| Incorporated Siloxane (wt%) | 2.84 | 3.16 | -- | -- |
| Bound Siloxane (wt%) | 1.34 | 1.22 | -- | -- |
| Flexural modulus (MPa) | -- | -- | 4696 | 4743 |
| Flexural strength (MPa) | -- | -- | 144.4 | 131.7 |
| Heat deflection temperature, 1.8 MPa (°C) | -- | -- | 200.5 | 201.0 |
| Heat deflection temperature, 0.45 MPa (°C) | -- | -- | 238.3 | 237.4 |
| Notched Izod ($kJ/m^2$) | -- | -- | 4.7 | 4.2 |
| Unnotched Izod ($kJ/m^2$) | -- | -- | 36.3 | 28.9 |
| Tensile modulus (MPa) | -- | -- | 5172 | 5250 |
| Tensile strength at yield (MPa) | -- | -- | 100.1 | 93.7 |
| Tensile elongation at break (%) | -- | -- | 2.9 | 2.5 |
| No. flame bars out of 50 burning > 10 sec | -- | -- | 38 | 32 |
| UL 94 Vertical Burn Test Rating | -- | -- | failed | failed |

EXAMPLES 4-9 (reference examples)

These examples further illustrate compositions comprising a polyamide, a poly(arylene ether)-polysiloxane block copolymer, and a metal dialkylphosphinate. These compositions include about 30 weight percent glass fibers, and are therefore reference examples that do not fall into the scope of the present invention. Compositions and properties are summarized in Table 8.

Table 8

| | Ex. 4 | Ex. 5 | Ex. 6 | Ex. 7 |
|---|---|---|---|---|
| COMPOSITIONS | | | | |
| PA66 | 50 | 50 | 44 | 44 |
| Glass fibers | 30 | 30 | 30 | 30 |
| DEPAL | 12 | 12 | 12 | 12 |
| TSAN | 0.15 | 0.15 | 0.15 | 0.15 |
| PPE-Si5%/CA (98/2) | 8 | 0 | 14 | 0 |
| PPE-Si20%/CA (98/2) | 0 | 8 | 0 | 14 |
| PROPERTIES | | | | |
| Flexural modulus (MPa) | 9976 | 9812 | 9974 | 9361 |
| Heat deflection temperature, 1.8 MPa (°C) | 240 | 240 | 235 | 228 |
| Notched Izod ($kJ/m^2$) | 7.4 | 6.9 | 6.6 | 5.8 |
| Tensile modulus (MPa) | 9907 | 9117 | 9426 | 8657 |
| Tensile strength at yield (MPa) | 141.5 | 129.9 | 134.5 | 111.8 |
| Tensile elongation at break (%) | 2.2 | 2.0 | 2.1 | 1.7 |
| UL 94 Rating at 2 mm thickness | V-1 | V-1 | V-1 | V-0 |
| UL 94 Rating at 1 mm thickness | V-1 | V-1 | V-1 | V-0 |

Table 8 (cont.)

| | Ex. 8 | Ex. 9 |
|---|---|---|
| COMPOSITIONS | | |
| PA66 | 38 | 38 |
| Glass fibers | 30 | 30 |
| DEPAL | 12 | 12 |
| TSAN | 0.15 | 0.15 |
| PPE-Si5%/CA (98/2) | 20 | 0 |
| PPE-Si20%/CA (98/2) | 0 | 20 |
| PROPERTIES | | |
| Flexural modulus (MPa) | 9339 | 9380 |
| Heat deflection temperature, 1.8 MPa (°C) | 215 | 210 |
| Notched Izod ($kJ/m^2$) | 6.2 | 5.0 |
| Tensile modulus (MPa) | 9099 | 8280 |
| Tensile strength at yield (MPa) | 125.0 | 99.2 |
| Tensile elongation at break (%) | 2.0 | 1.6 |
| UL 94 Rating at 2 mm thickness | V-0 | V-0 |
| UL 94 Rating at 1 mm thickness | V-0 | V-0 |

The reference examples above collectively demonstrate that glass-filled blends of poly(arylene ether) and polyamide show substantial improvements in ductility and flame retardancy when the poly(arylene ether) comprises a poly(arylene ether)-polysiloxane block copolymer. Corresponding blends prepared from poly(arylene ether)-polysiloxane graft copolymers exhibited inferior properties.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims.

All ranges disclosed herein are inclusive of the endpoints, and the endpoints are independently combinable with each other.

The use of the terms "a" and "an" and "the" and similar referents in the context of describing the invention (especially in the context of the following claims) are to be construed to cover both the singular and the plural, unless otherwise indicated herein or clearly contradicted by context. Further, it should further be noted that the terms "first," "second," and the like herein do not denote any order, quantity, or importance, but rather are used to distinguish one

element from another. The modifier "about" used in connection with a quantity is inclusive of the stated value and has the meaning dictated by the context (e.g., it includes the degree of error associated with measurement of the particular quantity).

## Claims

**1.** A composition, comprising:

75 to 90 weight percent of a compatibilized blend of a polyamide comprising polyamide-6,6, and a poly(arylene ether)-polysiloxane block copolymer, the compatibilized blend being the product of compatibilizing 40 to 60 parts by weight of the polyamide and 40 to 60 parts by weight of the poly(arylene ether)-polysiloxane block copolymer, based on the total weight of the polyamide and the poly(arylene ether)-polysiloxane block copolymer;
2 to 10 weight percent of a metal dialkylphosphinate comprising aluminum tris(diethylphosphinate); and
5 to 15 weight percent glass fibers;
wherein the poly(arylene ether)-polysiloxane block copolymer comprises the product of a process comprising oxidatively copolymerizing of a monomer mixture comprising 90 to 99 parts by weight of a monohydric phenol and 1 to 10 parts by weight of a hydroxyaryl-terminated polysiloxane;
wherein all weight percents are based on the total weight of the composition.

**2.** The composition of claim 1, wherein the hydroxyaryl-diterminated polysiloxane comprises a plurality of repeating units having the structure

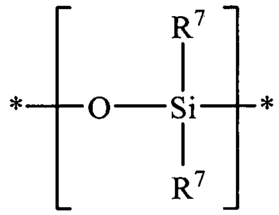

wherein each occurrence of $R^7$ is independently hydrogen, $C_1$-$C_{12}$ hydrocarbyl or $C_1$-$C_{12}$ halohydrocarbyl; and two terminal units having the structure

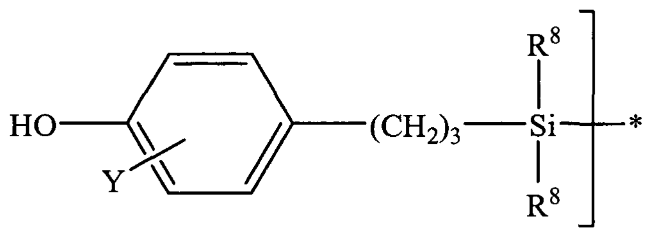

wherein Y is hydrogen, $C_1$-$C_{12}$ hydrocarbyl, $C_1$-$C_{12}$ hydrocarbyloxy, or halogen, and wherein each occurrence of $R^8$ is independently hydrogen, $C_1$-$C_{12}$ hydrocarbyl or $C_1$-$C_{12}$ halohydrocarbyl.

**3.** The composition of claim 1 or 2, wherein the monohydric phenol comprises 2,6-dimethylphenol, and the hydroxyaryl-terminated polysiloxane has the structure

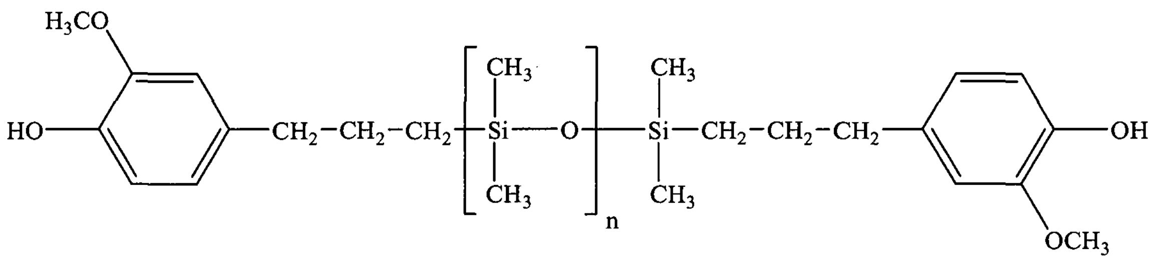

wherein n is, on average, 5 to 100.

4. The composition of any of claims 1-3, wherein the poly(arylene ether)-polysiloxane block copolymer provides 1 to 5 weight percent polysiloxane to the composition.

5. A method of forming a composition, the method comprising:

melt blending

35 to 45 weight percent of a polyamide comprising polyamide-6,6, 35 to 47 weight percent of a poly(arylene ether)-polysiloxane block copolymer,
2 to 10 weight percent of a metal dialkylphosphinate comprising aluminum tris(diethylphosphinate), and
5 to 15 weight percent glass fibers to form a composition;

wherein the poly(arylene ether)-polysiloxane block copolymer comprises the product of a process comprising oxidatively copolymerizing of a monomer mixture comprising 90 to 99 parts by weight of a monohydric phenol and 1 to 10 parts by weight of a hydroxyaryl-terminated polysiloxane, based on the total weight of the monohydric phenol and the hydroxyaryl-terminated polysiloxane;
wherein all weight percents are based on the total weight of the composition.

6. A composition prepared by the method of claim 5.

7. An article comprising the composition of any of claims 1-4 and 6.

## Patentansprüche

1. Zusammensetzung, umfassend:

75 bis 90 Gewichtsprozent einer kompatibilisierten bzw. verträglich gemachten Mischung bzw. Blend eines Polyamids, das Polyamid-6,6 umfasst, und eines Poly(arylenether)-Polysiloxan-Block-Copolymers, wobei die kompatibilisierte Mischung das Produkt des Kompatibilisierens von 40 bis 60 Gewichtsteilen des Polyamids und 40 bis 60 Gewichtsteilen des Poly(arylenether)-Polysiloxan-Block-Copolymers ist, bezogen auf das Gesamtgewicht des Polyamids und des Poly(arylenether)-Polysiloxan-Block-Copolymers;
2 bis 10 Gewichtsprozent eines Metalldialkylphosphinats, umfassend Aluminium-tris(diethylphosphinat); und
5 bis 15 Gewichtsprozent Glasfasern;
wobei das Poly(arylenether)-Polysiloxan-Block-Copolymer das Produkt eines Verfahrens umfasst, welches oxidatives Copolymerisieren eines Monomergemisches umfasst, das 90 bis 99 Gewichtsteile eines einwertigen Phenols und 1 bis 10 Gewichtsteile eines Hydroxyaryl-terminierten Polysiloxans umfasst;
wobei alle Gewichtsprozentangaben auf das Gesamtgewicht der Zusammensetzung bezogen sind.

2. Zusammensetzung nach Anspruch 1, wobei das Hydroxyaryl-diterminierte Polysiloxan eine Vielzahl von Wiederholungseinheiten mit der Struktur

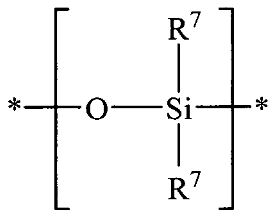

wobei jedes Auftreten von $R^7$ unabhängig Wasserstoff, $C_1$-$C_{12}$-Hydrocarbyl oder $C_1$-$C_{12}$-Halogenhydrocarbyl bedeutet; und
zwei terminale Einheiten mit der Struktur

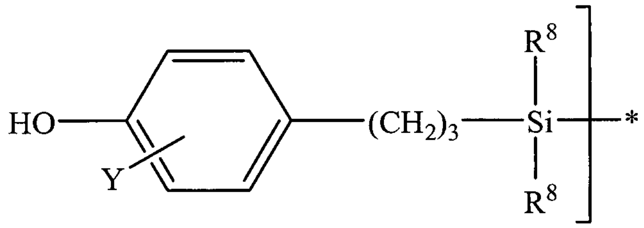

wobei Y Wasserstoff, $C_1$-$C_{12}$-Hydrocarbyl, $C_1$-$C_{12}$-Hydrocarbyloxy oder Halogen bedeutet, und wobei jedes Auftreten von $R^8$ unabhängig Wasserstoff, $C_1$-$C_{12}$-Hydrocarbyl oder $C_1$-$C_{12}$-Halogenhydrocarbyl bedeutet, umfasst.

**3.** Zusammensetzung nach Anspruch 1 oder 2, wobei das einwertige Phenol 2,6-Dimethylphenol umfasst, und das Hydroxyaryl-terminierte Polysiloxan die Struktur

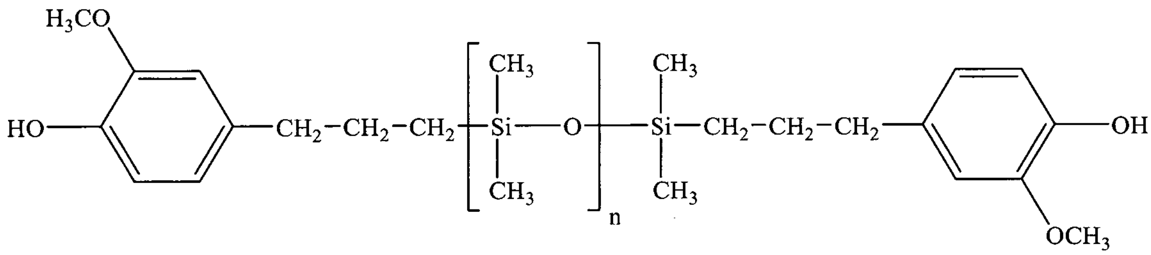

aufweist, wobei n durchschnittlich 5 bis 100 ist.

**4.** Zusammensetzung nach irgendeinem der Ansprüche 1 bis 3, wobei das Poly(arylenether)-Polysiloxan-Block-Copolymer 1 bis 5 Gewichtsprozent Polysiloxan der Zusammensetzung bereitstellt.

**5.** Verfahren zur Bildung einer Zusammensetzung, wobei das Verfahren umfasst:

Schmelzmischen von

35 bis 45 Gewichtsprozent eines Polyamids, das Polyamid-6,6 umfasst,
35 bis 47 Gewichtsprozent eines Poly(arylenether)-Polysiloxan-Block-Copolymers,
2 bis 10 Gewichtsprozent eines Metalldialkylphosphinats, umfassend Aluminium-tris(diethylphosphinat), und
5 bis 15 Gewichtsprozent Glasfasern,
zur Bildung einer Zusammensetzung;
wobei das Poly(arylenether)-Polysiloxan-Block-Copolymer das Produkt eines Verfahrens umfasst, welches oxidatives Copolymerisieren eines Monomergemisches umfassen, das 90 bis 99 Gewichtsteile eines einwertigen Phenols und 1 bis 10 Gewichtsteile eines Hydroxyaryl-terminierten Polysiloxans, bezogen auf das Gesamtgewicht des einwertigen Phenols und des Hydroxyaryl-terminierten Polysiloxans, umfasst;
wobei alle Gewichtsprozentangaben auf das Gesamtgewicht der Zusammensetzung bezogen sind.

**6.** Zusammensetzung, hergestellt durch das Verfahren nach Anspruch 5.

**7.** Gegenstand, umfassend die Zusammensetzung nach irgendeinem der Ansprüche 1 bis 4 und 6.

**Revendications**

**1.** Composition, comprenant :

75 à 90 pourcents en poids d'un mélange compatibilisé d'un polyamide comprenant du polyamide-6,6, et d'un copolymère à blocs poly(arylène éther)-polysiloxane, le mélange compatibilisé étant le produit de la compatibilisation de 40 à 60 parties en poids du polyamide et de 40 à 60 parties en poids du copolymère à blocs

poly(arylène éther)-polysiloxane, par rapport au poids total du polyamide et du copolymère à blocs poly(arylène éther)-polysiloxane ;
2 à 10 pourcents en poids d'un dialkylphosphinate métallique comprenant du tris(diéthylphosphinate) d'aluminium ; et
5 à 15 pourcents en poids de fibres de verre ;
dans laquelle le copolymère à blocs poly(arylène éther)-polysiloxane comprend le produit d'un procédé comprenant la copolymérisation par oxydation d'un mélange de monomères comprenant 90 à 99 parties en poids d'un monophénol et un 1 à 10 parties en poids d'un polysiloxane à terminaison hydroxyaryle ;
tous les pourcentages en poids étant rapportés au poids total de la composition.

**2.** Composition selon la revendication 1, dans laquelle le polysiloxane à double terminaison hydroxyaryle comprend

une pluralité de motifs répétitifs ayant la structure

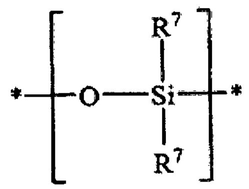

dans laquelle chaque occurrence de $R^7$ est d'une manière indépendante un atome d'hydrogène, un groupe hydrocarbyle en $C_1$-$C_{12}$ ou halogénohydrocarbyle en $C_1$-$C_{12}$ ; et
deux unités terminales ayant la structure

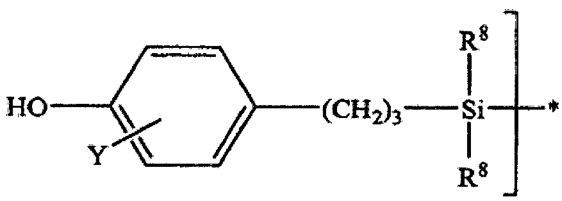

dans laquelle Y est un atome d'hydrogène, un groupe hydrocarbyle en $C_1$-$C_{12}$, hydrocarbyloxy en $C_1$-$C_{12}$ ou halogéno, et chaque occurrence de $R^8$ est d'une manière indépendante un atome d'hydrogène, un groupe hydrocarbyle en $C_1$-$C_{12}$ ou halogénohydrocarbyle en $C_1$-$C_{12}$.

**3.** Composition selon la revendication 1 ou 2, dans laquelle le monophénol comprend le 2,6-diméthylphénol, et le polysiloxane à terminaison hydroxyaryle a la structure

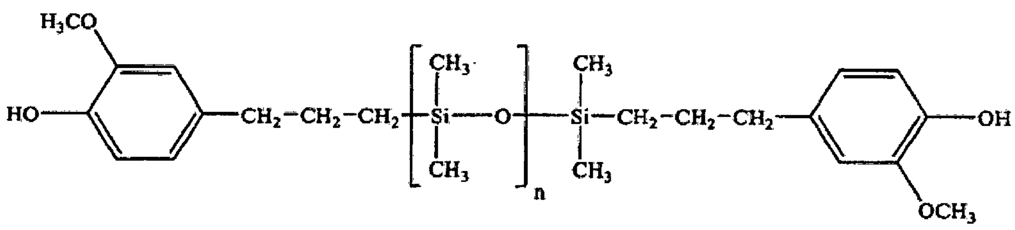

dans laquelle n vaut en moyenne 5 à 100.

**4.** Composition selon l'une quelconque des revendications 1 à 3, dans laquelle le copolymère à blocs poly(arylène éther)-polysiloxane fournit à la composition 1 à 5 pourcents en poids de polysiloxane.

**5.** Procédé de formation d'une composition, le procédé comprenant :

le mélange à l'état fondu

de 35 à 45 pourcents en poids d'un polyamide comprenant du polyamide-6,6,
de 35 à 47 pourcents en poids d'un copolymère à blocs poly(arylène éther)-polysiloxane,
de 2 à 10 pourcents en poids d'un dialkylphosphinate métallique comprenant le tris(diéthylphosphinate) d'aluminium, et
de 5 à 15 pourcents en poids de fibres de verre, pour former une composition ;
dans laquelle le copolymère à blocs poly(arylène éther)-polysiloxane comprend le produit d'un procédé comprenant la copolymérisation par oxydation d'un mélange de monomères comprenant 90 à 99 parties en poids d'un monophénol et un 1 à 10 parties en poids d'un polysiloxane à terminaison hydroxyaryle ;
tous les pourcentages en poids étant rapportés au poids total de la composition.

**6.** Composition préparée par le procédé de la revendication 5.

**7.** Article comprenant la composition de l'une quelconque des revendications 1 à 4 et 6.

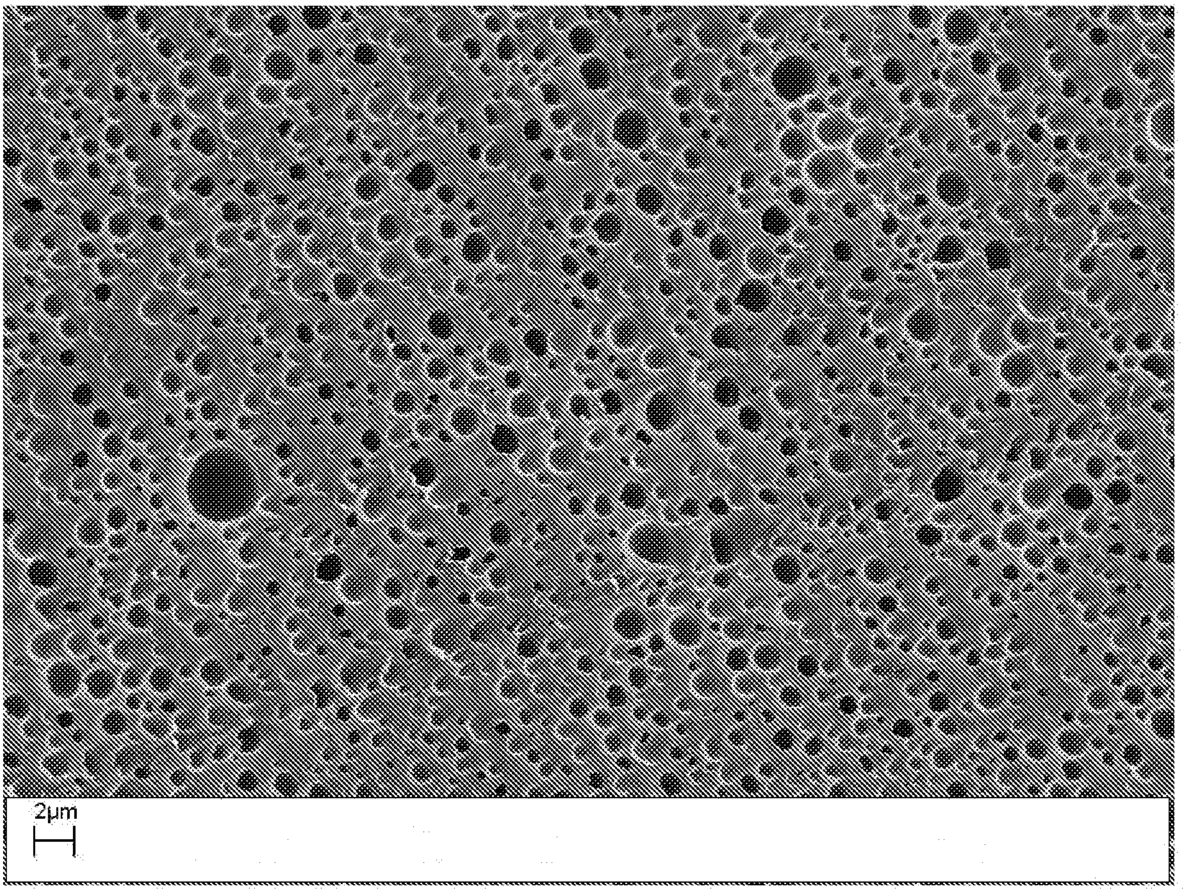


FIG. 1

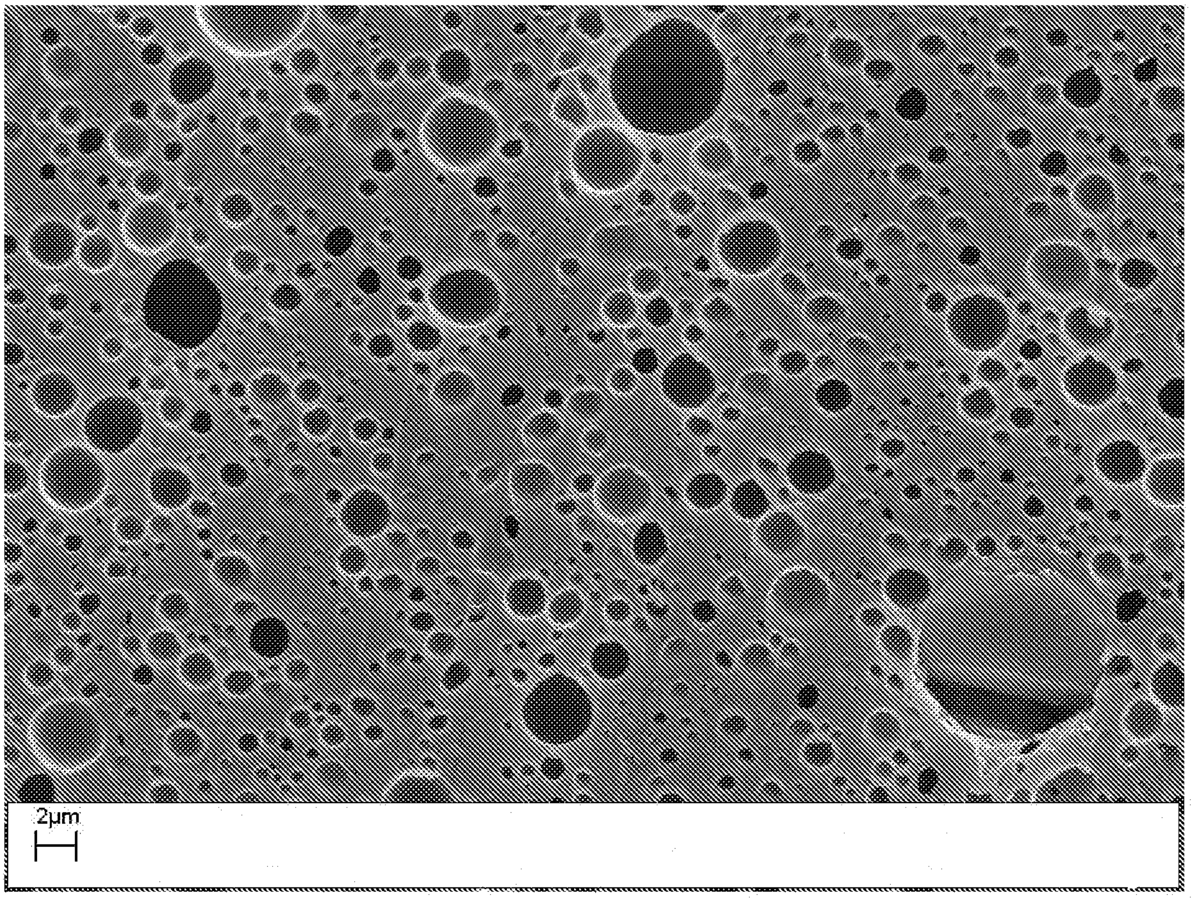


FIG. 2

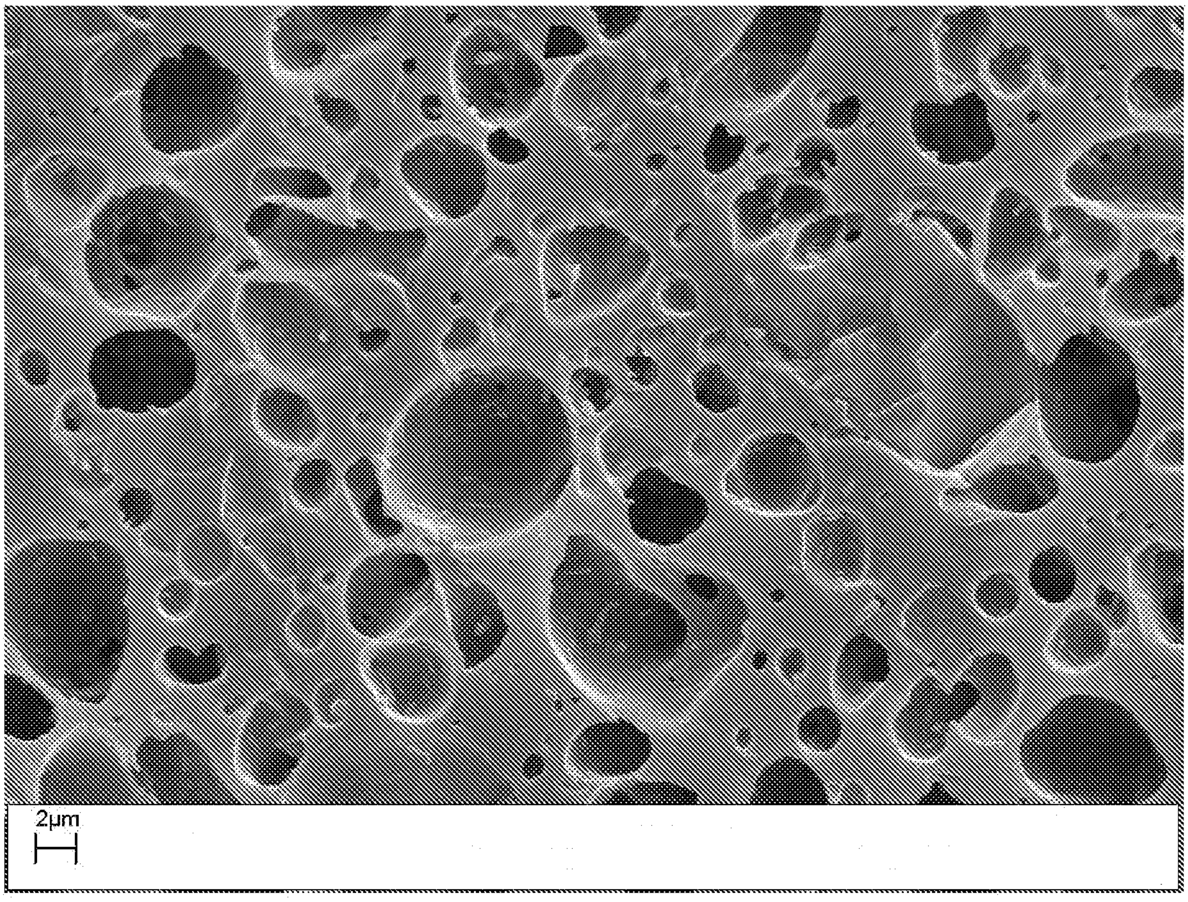


FIG. 3

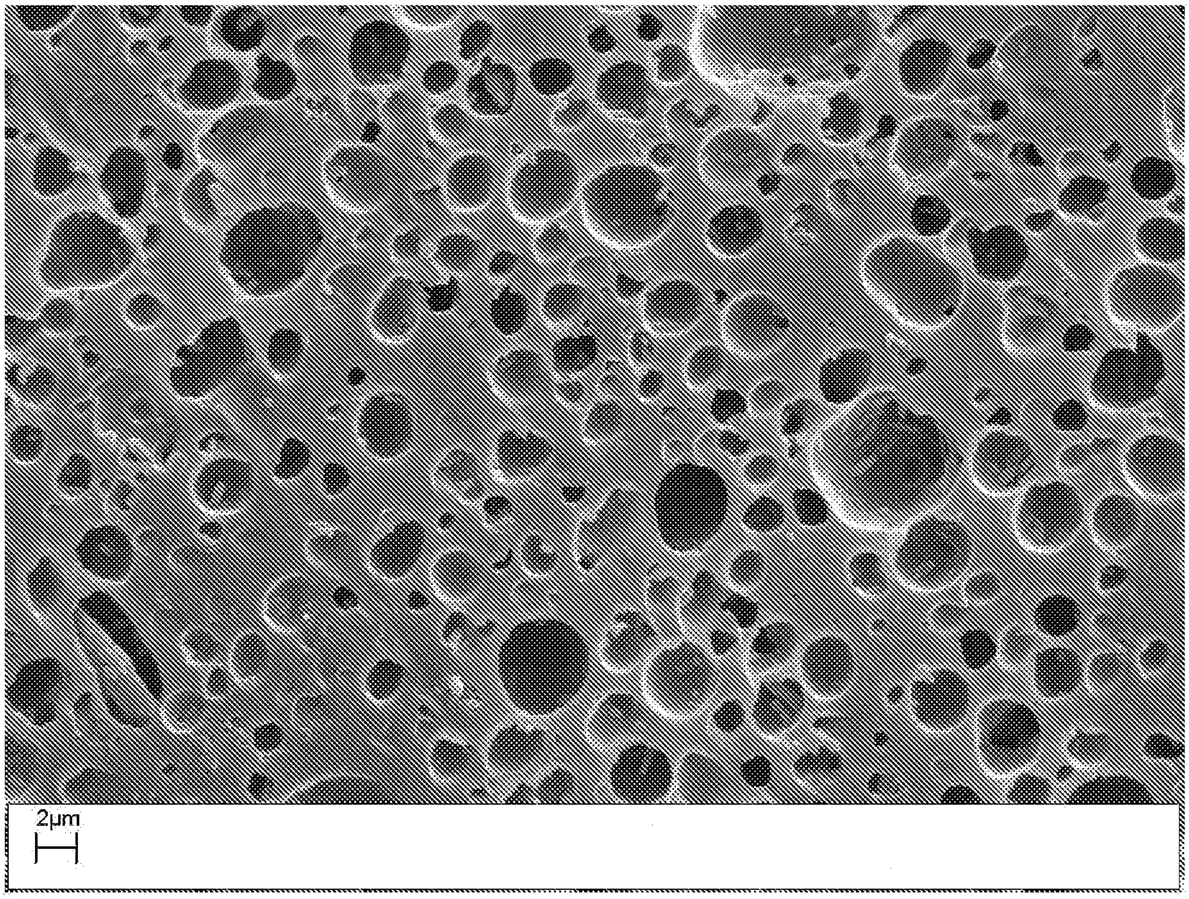


FIG. 4

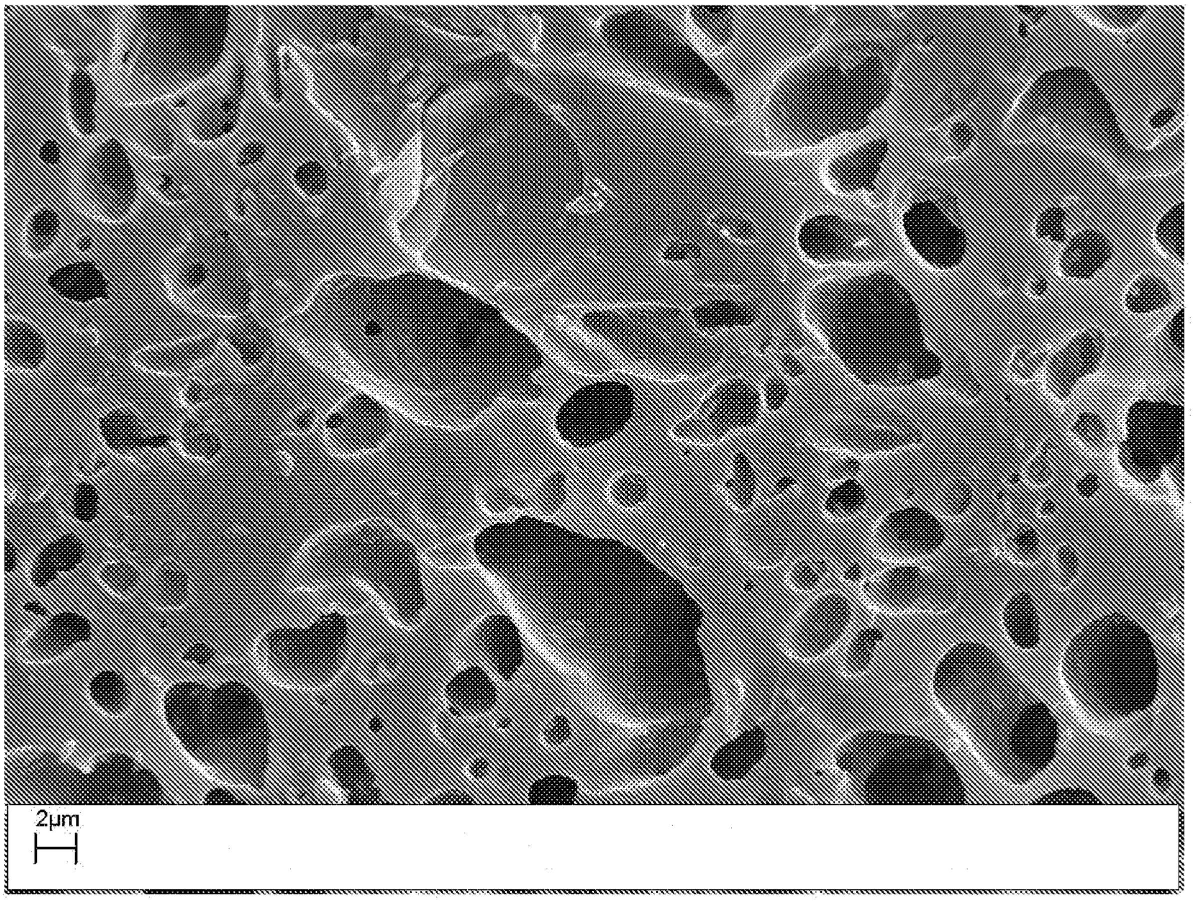


FIG. 5

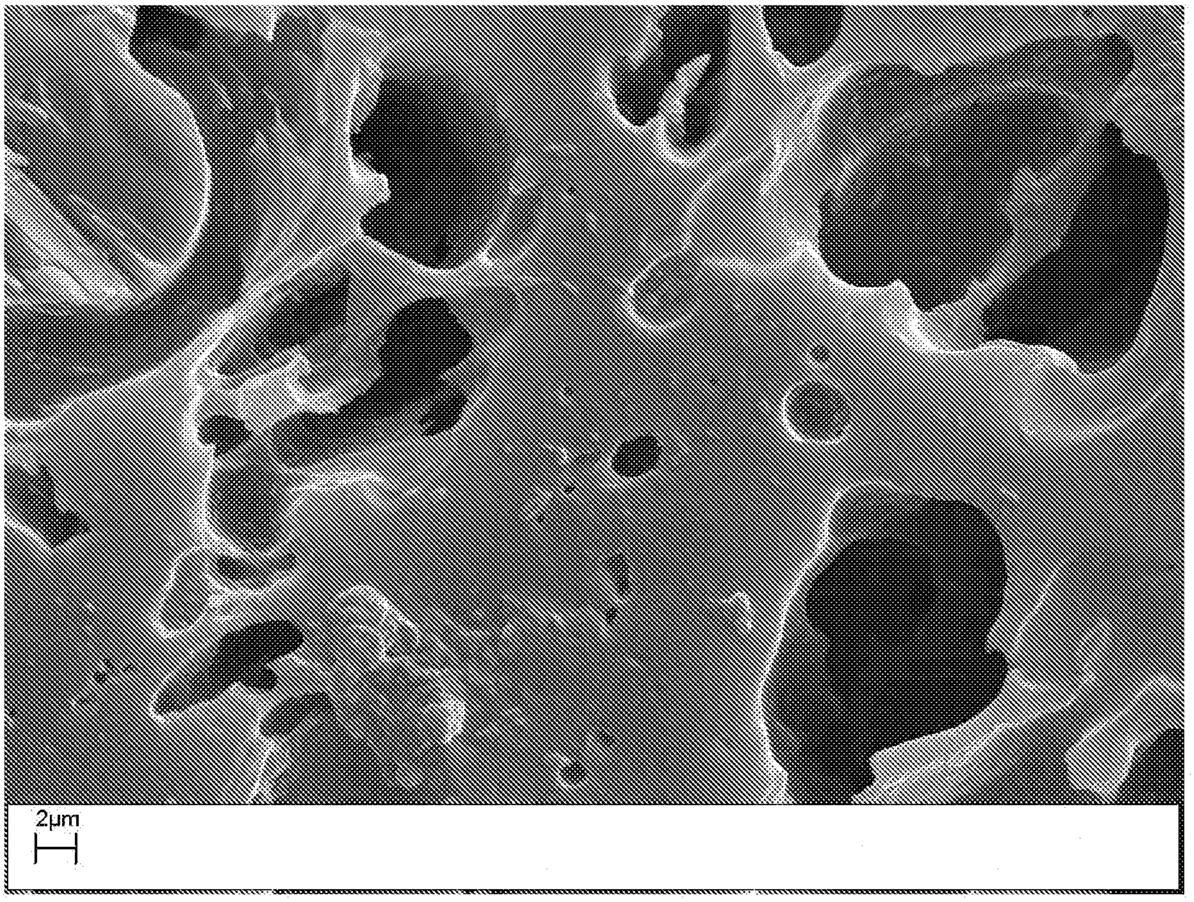


FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008157034 A1
- US 5357022 A
- US 4970272 A, Gallucci
- US 2071250 A
- US 2071251 A
- US 2130523 A
- US 2130948 A, Carothers
- US 2241322 A
- US 2312966 A, Hanford
- US 2512606 A, Bolton
- US 20090318635 A1
- US 20110152471 A1
- US 5132365 A, Gallucci
- US 6593411 B, Koevoets
- US 20030166762 A1, Koevoets
- US 61224936 A
- US 49598008 A


### Non-patent literature cited in the description


- **K. P. CHAN et al.** Facile Quantitative Analysis of Hydroxyl End Groups of Poly(2,6-dimethyl-1,4-phenylene oxide)s by P NMR Spectroscopy. *Macromolecules,* 1994, vol. 27, 6371-6375
- *CHEMICAL ABSTRACTS,* 1012321-47-9
- *CHEMICAL ABSTRACTS,* 156065-00-8
- *CHEMICAL ABSTRACTS,* 32131-17-2
- *CHEMICAL ABSTRACTS,* 2082-79-3
- *CHEMICAL ABSTRACTS,* 225789-38-8